(19)

Europäisches
Patentamt
European
Patent Office
Office européen
des brevets

(11) **EP 3 712 835 A1**

(12) **EUROPEAN PATENT APPLICATION**

(43) Date of publication:
23.09.2020 Bulletin 2020/39

(51) Int Cl.:
*G06Q 40/04* *(2012.01)*     *G06Q 40/00* *(2012.01)*

(21) Application number: 20163898.8

(22) Date of filing: 18.03.2020

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 18.03.2019 US 201962820240 P
13.06.2019 US 201916440311

(71) Applicant: **Chicago Mercantile Exchange Inc.**
**Chicago IL Illinois 60606 (US)**

(72) Inventors:
• **JOHNSON, OWAIN JAMES**
**Chicago, IL Illinois 60606 (US)**
• **McHICH, ADILA**
**Chicago, IL Illinois 60606 (US)**

(74) Representative: **Boult Wade Tennant LLP**
**Salisbury Square House**
**8 Salisbury Square**
**London EC4Y 8AP (GB)**

(54) **RANGE-LIMITED DATA OBJECT LINKING AND EQUIVALENCE**

(57) A method for data object linking and equivalence includes collecting a plurality of data objects, each data object having a respective quantity falling within a predetermined range of acceptable data object quantities, implementing an optimization procedure to link pairs of opposing data objects of the plurality of data objects with one another, the optimization procedure having a constraint that the respective quantities of each pair of opposing data objects fall within a predetermined offset magnitude of one another, determining, for each linked pair, an offset amount for the linked pair of opposing data objects, and applying, for each linked pair, the offset amount to a record associated with one of the linked pair of opposing data objects to attain equivalence of the linked pair of opposing data objects.

EP 3 712 835 A1

**Description**

CROSS-REFERENCE TO RELATED APPLICATION

This application claims the benefit of the filing date under 35 U.S.C. §119(e) of U.S. Provisional Application Serial No. 62/820,240, filed March 18, 2019, the entire disclosure of which is hereby incorporated by reference.

BACKGROUND

A data transaction processing system, such as an exchange computing system, processes data items or objects. Customer or user devices (e.g., client computers) may submit electronic data transaction request messages, e.g., inbound messages, to the data transaction processing system over a data communication network. The electronic data transaction request messages may include, for example, transaction or position matching parameters, such as instructions and/or values, for processing the data transaction request messages within the data transaction processing system. The instructions may be to perform transactions, e.g., buy or sell a quantity of a product at a specified price. Products, e.g., financial instruments, positions related to such products, or order books representing the state of an electronic marketplace for a product, may be represented as or via data objects within the exchange computing system. The instructions may also be conditional, e.g., buy or sell a quantity of a product at a given value if a trade for the product is executed at some other reference value.

There are three ways to close a position in a market. Offsetting contracts through liquidation is by far the most popular. Other methods include cash settlement (in index or interest rate markets) or physical delivery (in hard asset markets). Liquidation - also called an offset or a reversing trade - completes a transaction by bringing an investor's net position back to zero. Back to zero means that, if a participant has purchased a specific number of contracts for a specific commodity, for delivery on a specific date, the participant has sold the same number of contracts for the same commodity for the same delivery date. If, for example, instead, the participant shorted ten March iron ore contracts, then the participant must buy ten March iron ore contracts to offset the position. Typically, the counterparty for the reversing trade is going to be a different participant than the counterparty for the initial trade. If the reversal is not precisely matched, though, the effect is that the participant enters into a new obligation instead of canceling out the old one.

Physical delivery may also be used to close a position. Typically, contracts state that the transaction is complete when the underlying commodity is physically delivered. The delivery workflow is a manual process that is inefficient, redundant, lacks uniformity, and is challenged by delays, slowness, arbitration, and disputes. In an example of the delivery process, the date and location of the drop-off may be specified in the contract and governed by the rules of the exchange. A "warehouse receipt" then certifies possession of a commodity in a licensed warehouse that is recognized for delivery purposes by an exchange. A short position holder must be prepared to deliver the underlying commodity. The delivery instrument for certain futures may either a shipping certificate or a warehouse receipt. Only warehouses approved by the exchange can register and deliver these certificates or receipts. Therefore, a short position holder looking to deliver must be an approved warehouse or already own a certificate or receipt previously registered by an approved warehouse. A long position holder must be prepared to take delivery of the commodity and pay the full value of the underlying futures contract. The long position holder receives either a warehouse receipt or a shipping certificate which entitles them to obtain the physical commodity from an approved warehouse.

While most positions are cash settled, physically deliverable futures contract allow participants in the industry to manage price risk more effectively and efficiently. A futures contract allows customers to hedge price risk by agreeing to purchase a commodity at a fixed price in the future. The physical settlement of physical delivery futures, for example, liquid natural gas (LNG) involves assignment of positions by matching positions of the seller and the buyer based on an exact number of contracts that can only be equivalent to a full cargo. Such position matching encounters complications for at least two reasons: (1) the wide range of cargo size which makes the probability of matching two parties with exact volume after netting out all aggregate positions very slim and (2) partial loading is not permitted by terminals.

BRIEF DESCRIPTION OF THE DRAWINGS

Fig. 1 depicts a computer network system for implementation and/or support of range-limited position matching according to some embodiments.
Fig. 2 depicts a general computer system for implementation and/or support of range-limited position matching according to some embodiments.
Fig. 3 depicts a block diagram of a system for range-limited position matching in accordance with one or more embodiments.

Fig. 4 depicts a flow diagram of a method of range-limited position matching in accordance with one or more embodiments.

Fig. 5 depicts a set of positions for range-limited position matching in accordance with one example.

## DETAILED DESCRIPTION

The disclosed embodiments relate generally to methods and systems for range-limited data object linking and equivalence. In some cases, the disclosed methods and systems provide position matching (e.g., a match engine) that uses a standardized size parameter, as described herein. The disclosed methods and systems may consider cargo size and vessel frequency when matching, for instance, US LNG Export (USLE) futures positions. The disclosed methods and systems may provide position matching based on optimizing the allocation of long and short positions given the constraint of varying cargo sizes. This technique may ensure equivalency between matched positions and specific ranges of cargo size.

In some cases, the disclosed methods and system implement an adjustment (e.g., gross-up/gross-down) procedure by which the Clearing House may, e.g., at its sole discretion on the Allocation and Notice Day, adjust one party's physical position (e.g., a Buyer's position) to match another party's physical position (e.g., a Seller's position). Any excess or shortfall in the Buyer's physical position may be within a predetermined threshold, e.g., a threshold determined and published by the Exchange. Such excess or shortfall is then cash-settled. The cash settlement may be based on the Volume-Weighted Average Price (VWAP) settlement price during the corresponding contract month, but alternative or additional pricing methodologies may be used. The settlement price and/or other aspects of the cash settlement may be implemented pursuant to the pricing procedures established by the Exchange. The Buyer then takes delivery only of the physical quantity as adjusted, i.e., after adjustment for any excess or shortfall.

Although described in connection with US LNG Export positions, the disclosed methods and systems are well suited for use in connection with a wide variety of markets and financial products. For instance, the disclosed methods and systems may be used in connection with any market having constraints (e.g., delivery constraints) in the physical market.

The disclosed embodiments improve upon the technical field of data processing, including, for instance, data processing by a clearing house computer system. Other technical fields are improved by the disclosed methods and systems, as set forth by the examples described herein.

At least some of the problems solved by the disclosed systems and methods are specifically rooted in technology, specifically in data communications where a large volume of messages is transmitted over a network to a data transaction processor, and the messages are frequently updated/modified by the submitter or because the messages derive from an underlying that is constantly fluctuating, and are solved by means of a technical solution. The disclosed embodiments solve a communications network-centric problem of sending large amounts of inter-related messages (e.g., for inter-related financial instruments, or for different parameters of a variable) all configured to be executed/processed immediately upon receipt. Accordingly, the resulting problem is a problem arising in computer systems due to the high volume of disparate but inter-related messages processed by an exchange computing system. The solutions disclosed herein are, in one embodiment, implemented as automatic responses and actions by an exchange computing system computer.

The disclosed embodiments may be directed to an exchange computing system that includes hardware position matching processors that match, or attempt to match, electronic data transaction position objects with other electronic data transaction position objects counter thereto. Incoming electronic data transaction position objects may be established via communications (e.g., messages) from different client computers over a data communication network, and output electronic data transaction result messages may be transmitted to the client computers and may be indicative of results of the attempts to match incoming electronic data transaction position objects.

The disclosed embodiments may be implemented in association with a data transaction processing system that processes data items or objects, such as an exchange computing system. Customer or user devices (e.g., client computers) may submit electronic data transaction request messages, e.g., inbound messages, to the data transaction processing system over a data communication network. The electronic data transaction request messages may include, for example, transaction matching parameters, such as instructions and/or values, for processing the data transaction request messages within the data transaction processing system. The instructions may be to perform transactions, e.g., buy or sell a quantity of a product at a specified price. Products, e.g., financial instruments, positions related to such products, or order books representing the state of an electronic marketplace for a product, may be represented as or via data objects within the exchange computing system. The instructions may also be conditional, e.g., buy or sell a quantity of a product at a given value if a trade for the product is executed at some other reference value.

A "commodity futures contract" or "futures contract" gives a contract holder an obligation to make or take physical delivery of an associated commodity (e.g., corn, wheat, gold, etc.) under the terms of the contract. Both parties of a futures contract must fulfill the terms of contract on the settlement date. The seller delivers the underlying asset to the buyer. The buyer pays the seller for the underlying asset. Generally, physical delivery of commodities includes taking delivery of basic resources such as crude oil, etc., agricultural products such as sugar, coffee beans, soybeans, rice, wheat, corn, soybeans, etc. and metals such aluminum, gold, silver, etc. An actual physical commodity is thus delivered at the completion of a contract.

A spot market is where financial instruments, such as commodities and securities, are traded for immediate delivery. Delivery is the exchange of cash for the financial instrument. In spot markets, spot trades are made with spot prices. This varies from a futures market, since a futures contract is a based on delivery of the underlying asset at a future date. Organized exchanges and over-the-counter (OTC) markets may provide spot trading or futures trading. The following embodiments may be used to provide support for position matching in any market, e.g. futures, options, or spot.

With a physical delivery, the underlying asset of the option or derivatives contract is physically delivered on a predetermined delivery date. Exchanges specify the conditions of delivery for the contracts they cover. The exchange designates warehouse and delivery locations for many commodities. When delivery takes place, a warrant or bearer receipt that represents a certain quantity and quality of a commodity in a specific location changes hands from the seller to the buyer who then makes full payment. The buyer has the right to remove the commodity from the warehouse or has the option of leaving the commodity at the storage facility for a periodic fee. The buyer could also arrange with the warehouse to transport the commodity to another location of his or her choice, including his or her home, and pays any transportation fees. In addition to delivery specifications stipulated by the exchanges, the quality, grade, or nature of the underlying asset to be delivered are also regulated by the exchanges.

Most derivatives are not actually exercised, but are traded out before their delivery date. However, physical delivery still occurs with some trades. Settlement by physical delivery is carried out by clearing brokers or their agents. Promptly after the last day of trading, the regulated exchange's clearing organization will report a purchase and sale of the underlying asset at the previous day's settlement price. Traders who hold a short position in a physically settled security futures contract to expiration are required to make delivery of the underlying asset. Those who already own the assets may tender them to the appropriate clearing organization. Traders who do not own assets are obligated to purchase them at the current price.

The disclosed data processing systems and methods provide for the allocation and matching of positions post-expiry with consideration to inherent constraints that deliveries can only be performed in specific volumes/quantities. The data processing systems may include various specifically configured processors, e.g., matching processors, that link data objects and apply offset amounts to attain equivalence of the linked objects. Such linking and other processing may be provided, e.g., automatically, as a part of and/or in conjunction with implementation of an optimization procedure.

The disclosed methods and systems may additionally generate information indicative of a state of a delivery environment (e.g., the state of the order book) based on the processing of the data objects, and report this information to data recipient computing systems via outbound messages published via one or more data feeds that contain electronic data transaction result messages. While the disclosed embodiments may be described with respect to linking and equivalence in connection with physical delivery, it will be appreciated that the disclosed embodiments may be implemented with respect to other contexts later developed, such as other position matching contexts.

For example, one environment where the disclosed embodiments may be desirable is in financial markets, and in particular, electronic financial exchanges, such as the Chicago Mercantile Exchange Inc. (CME).

I. EXCHANGE COMPUTING SYSTEM

An exchange provides one or more markets for the purchase and sale of various types of products including financial instruments such as stocks, bonds, futures contracts, options, currency, cash, and other similar instruments. Agricultural products and commodities are also examples of products traded on such exchanges. A futures contract is a product that is a contract for the future delivery of another financial instrument such as a quantity of grains, metals, oils, bonds, currency, or cash. Generally, each exchange establishes a specification for each market provided thereby that defines at least the product traded in the market, minimum quantities that must be traded, and minimum changes in price (e.g., tick size). For some types of products (e.g., futures or options), the specification further defines a quantity of the underlying product represented by one unit (or lot) of the product, and delivery and expiration dates. For some types of products (e.g. variable commodities), the specification may further define variables, step sizes, premiums, or discounts for use in processing orders. As will be described, the exchange may further define the position matching algorithm, or rules, by which positions will be matched/allocated to opposing positions.

Generally, a market may involve market makers, such as market participants who consistently provide bids and/or offers at specific prices in a manner typically conducive to balancing risk, and market takers who may be willing to execute transactions at prevailing bids or offers may be characterized by more aggressive actions so as to maintain risk and/or exposure as a speculative investment strategy. From an alternate perspective, a market maker may be considered a market participant who places an order to sell at a price at which there is no previously or concurrently provided counter order. Similarly, a market taker may be considered a market participant who places an order to buy at a price at which there is a previously or concurrently provided counter order. A balanced and efficient market may involve both market makers and market takers, coexisting in a mutually beneficial basis. The mutual existence, when functioning properly, may facilitate liquidity in the market such that a market may exist with "tight" bid-ask spreads (e.g., small difference between bid and ask prices) and a "deep" volume from many currently provided orders such that large quantity orders may be executed without driving prices significantly higher or lower.

A financial instrument trading system, such as a futures exchange, such as the Chicago Mercantile Exchange Inc. (CME), provides a contract market where financial instruments, e.g., futures and options on futures, are traded using electronic systems. "Futures" is a term used to designate all contracts for the purchase or sale of financial instruments or physical commodities for future delivery or cash settlement on a commodity futures exchange. A futures contract is a legally binding agreement to buy or sell a commodity at a specified price at a predetermined future time. An option contract is the right, but not the obligation, to sell or buy the underlying instrument (in this case, a futures contract) at a specified price on or before a certain expiration date. An option contract offers an opportunity to take advantage of futures price moves without actually having a futures position. The commodity to be delivered in fulfillment of the contract, or alternatively the commodity for which the cash market price shall determine the final settlement price of the futures contract, is known as the contract's underlying reference or "underlier." The underlying or underlier for an options contract is the corresponding futures contract that is purchased or sold upon the exercise of the option.

Typically, the terms and conditions of each futures contract are standardized as to the specification of the contract's underlying reference commodity, the composition of the commodity, quantity, delivery date, and means of contract settlement. In embodiments described herein, terms and conditions of each futures contract may be partially standardized as to the specification of the contract's underlying reference commodity and attributes thereof. The underlying reference commodity may include a range of possible qualities, quantities, delivery dates, and other attributes. For a spot market transaction, the underlying quality and attributes may be set, while a futures contract may provide predetermined offsets to allow for possible settlement of a non-conforming delivery. Cash settlement is a method of settling a futures contract whereby the parties effect final settlement when the contract expires by paying/receiving the loss/gain related to the contract in cash, rather than by effecting physical sale and purchase of the underlying reference commodity at a price determined by the futures contract, price. Options and futures may be based on more generalized market indicators, such as stock indices, interest rates, futures contracts and other derivatives.

An exchange may provide for a centralized "clearing house" through which trades made must be confirmed, matched, and settled each day until offset or delivered. The clearing house may be an adjunct to an exchange, and may be an operating division of an exchange, which is responsible for settling trading accounts, clearing trades, collecting and maintaining performance bond funds, regulating delivery, and reporting trading data. One of the roles of the clearing house is to mitigate credit risk. Clearing is the procedure through which the clearing house becomes buyer to each seller of a futures contract, and seller to each buyer, also referred to as a novation, and assumes responsibility for protecting buyers and sellers from financial loss due to breach of contract, by assuring performance on each contract. A clearing member is a firm qualified to clear trades through the clearing house.

An exchange computing system may operate under a central counterparty model, where the exchange acts as an intermediary between market participants for the transaction of financial instruments. In particular, the exchange computing system novates itself into the transactions between the market participants, i.e., splits a given transaction between the parties into two separate transactions where the exchange computing system substitutes itself as the counterparty to each of the parties for that part of the transaction, sometimes referred to as a novation. In this way, the exchange computing system acts as a guarantor and central counterparty and there is no need for the market participants to disclose their identities to each other, or subject themselves to credit or other investigations by a potential counterparty. For example, the exchange computing system insulates one market participant from the default by another market participant. Market participants need only meet the requirements of the exchange computing system. Anonymity among the market participants encourages a more liquid market environment as there are lower barriers to participation. The exchange computing system can accordingly offer benefits such as centralized and anonymous order matching and clearing.

A match engine within a financial instrument trading system may comprise a transaction processing system that processes a high volume, e.g., millions, of messages or orders in one day. The messages are typically submitted from market participant computers. Exchange match engine systems may be subject to variable messaging loads due to variable market messaging activity. Performance of a match engine depends to a certain extent on the magnitude of the messaging load and the work needed to process that message load at any given time. For example, the performance of the match engine may be adversely affected if the processing workload to achieve such order matching increases.

The match engine (and/or another engine or component) may implement additional matching, i.e., position matching, in connection with physical delivery. Position matching addresses the physical delivery of the commodities underlying the futures contract. Upon or after contract expiry, the clearing house matches opposing positions (e.g., short and long positions) of the market participants for physical delivery in a certain delivery month by a set time.

The disclosed methods and systems are configured to minimize or otherwise decrease the processing workload of match engines or other entities implementing position and other matching or linking. In some cases, an exchange match engine may process large numbers of messages, positions, and other data objects during times of high volume messaging activity. With limited processing capacity, any inefficiencies in processing will raise the likelihood that high data object volumes will increase the response time or latency experienced by market participants. The disclosed methods and systems improve the efficiency of workload processing by simplifying the manner in which constraints on delivery are addressed in matching.

## II. ELECTRONIC TRADING

Electronic trading of financial instruments, such as futures contracts, is conducted by market participants sending orders, such as to buy or sell one or more futures contracts, in electronic form to the exchange. These electronically submitted orders to buy and sell are then matched, if possible, by the exchange, i.e., by the exchange's matching engine, to execute a trade. Outstanding (unmatched, wholly unsatisfied/unfilled or partially satisfied/filled) orders are maintained in one or more data structures or databases referred to as "order books," such orders being referred to as "resting," and made visible, i.e., their availability for trading is advertised, to the market participants through electronic notifications/broadcasts, referred to as market data feeds. An order book is typically maintained for each product, e.g., instrument, traded on the electronic trading system and generally defines or otherwise represents the state of the market for that product, i.e., the current prices at which the market participants are willing buy or sell that product. As such, as used herein, an order book for a product may also be referred to as a market for that product.

Upon receipt of an incoming order to trade in a particular financial instrument, whether for a single-component financial instrument, e.g., a single futures contract, or for a multiple-component financial instrument, e.g., a combination contract such as a spread contract, a match engine, as described herein, will attempt to identify a previously received but unsatisfied order counter thereto, i.e., for the opposite transaction (buy or sell) in the same financial instrument at the same or better price (but not necessarily for the same quantity unless, for example, either order specifies a condition that it must be entirely filled or not at all).

In one embodiment, traders may buy and sell the disclosed tracking financial instrument instead of a futures contract that is associated with an underlying asset, where the futures contract may be settled by delivery of the underlying asset or by cash settlement.

Previously received but unsatisfied orders, i.e., orders which either did not match with a counter order when they were received or their quantity was only partially satisfied, referred to as a partial fill, are maintained by the electronic trading system in an order book database/data structure to await the subsequent arrival of matching orders or the occurrence of other conditions which may cause the order to be modified or otherwise removed from the order book.

If the match engine identifies one or more suitable previously received but unsatisfied counter orders, they, and the incoming order, are matched to execute a trade there between to at least partially satisfy the quantities of one or both the incoming order or the identified orders. If there remains any residual unsatisfied quantity of the identified one or more orders, those orders are left on the order book with their remaining quantity to await a subsequent suitable counter order, i.e., to rest. If the match engine does not identify a suitable previously received but unsatisfied counter order, or the one or more identified suitable previously received but unsatisfied counter orders are for a lesser quantity than the incoming order, the incoming order is placed on the order book, referred to as "resting", with original or remaining unsatisfied quantity, to await a subsequently received suitable order counter thereto. The match engine then generates match event data reflecting the result of this matching process. Other components of the electronic trading system, as will be described, then generate the respective order acknowledgment and market data messages and transmit those messages to the market participants.

Matching, which is a function typically performed by the exchange, is a process, for a given order which specifies a desire to buy or sell a quantity of a particular instrument at a particular price, of seeking/identifying one or more wholly or partially, with respect to quantity, satisfying counter orders thereto, e.g., a sell counter to an order to buy, or vice versa, for the same instrument at the same, or sometimes better, price (but not necessarily the same quantity), which are then paired for execution to complete a trade between the respective market participants (via the exchange) and at least partially satisfy the desired quantity of one or both of the order and/or the counter order, with any residual unsatisfied quantity left to await another suitable counter order, referred to as "resting." A match event may occur, for example, when an aggressing order matches with a resting order. In one embodiment, two orders match because one order includes instructions for or specifies buying a quantity of a particular instrument at a particular price, and the other order includes instructions for or specifies selling a (different or same) quantity of the instrument at a same or better price. It should be appreciated that performing an instruction associated with a message may include attempting to perform the instruction. Whether or not an exchange computing system is able to successfully perform an instruction may depend on the state of the electronic marketplace.

While the disclosed embodiments will be described with respect to a position matching implementation, e.g. implemented for each opposing positions for a certain financial product, it will be appreciated that the disclosed embodiments may be implemented so as to apply to order and other matching contexts, including, for instance, the above-described and other matching contexts involving one or more electronic trading systems, such as by monitoring an aggregate, correlated or other derivation of the relevant indicative parameters as described herein.

While the disclosed embodiments may be discussed in relation to futures and/or options on futures trading, it should be appreciated that the disclosed embodiments may be applicable to any equity, fixed income security, currency, commodity, options or futures trading system or market now available or later developed. It may be appreciated that a trading environment, such as a futures exchange as described herein, implements one or more economic markets where rights and obligations may be traded. As such, a trading environment may be characterized by a need to maintain market integrity, transparency, predictability, fair/equitable access and participant expectations with respect thereto. In addition, it may be appreciated that electronic trading systems further impose additional expectations and demands by market participants as to transaction processing speed, latency, capacity and response time, while creating additional complexities relating thereto. Accordingly, as will be described, the disclosed embodiments may further include functionality to ensure that the expectations of market participants are met, e.g., that transactional integrity and predictable system responses are maintained.

Financial instrument trading systems allow traders to submit orders and receive confirmations, market data, and other information electronically via electronic messages exchanged using a network. Electronic trading systems ideally attempt to offer a more efficient, fair and balanced market where market prices reflect a true consensus of the value of traded products among the market participants, where the intentional or unintentional influence of any one market participant is minimized if not eliminated, and where unfair or inequitable advantages with respect to information access are minimized if not eliminated.

Electronic marketplaces attempt to achieve these goals by using electronic messages to communicate actions and related data of the electronic marketplace between market participants, clearing firms, clearing houses, and other parties. The messages may be received using an electronic trading system, wherein an action or transaction associated with the messages may be executed. For example, the message may contain information relating to an order to buy or sell a product in a particular electronic marketplace, and the action associated with the message may indicate that the order is to be placed in the electronic marketplace such that other orders which were previously placed may potentially be matched to the order of the received message. Thus, the electronic marketplace may conduct market activities through electronic systems.

As may be perceived/experienced by the market participants from outside the Exchange or electronic trading system operated thereby, the following sequence describes how, at least in part, information may be propagated in such a system and how orders may be processed: (1) An opportunity is created at a matching engine of the Exchange, such as by placing a recently received but unmatched order on the order book to rest; (2) The matching engine creates an update reflecting the opportunity and sends it to a feed engine; (3) The feed engine multicasts it to all of the market participants to advertise the opportunity to trade; (4) The market participants evaluate the opportunity and each, upon completion of their evaluation, may or may not choose to respond with an order responsive to the resting order, i.e. counter to the resting order; (5) The Exchange gateway receives any counter orders generated by the market participants, sends confirmation of receipt back directly to each submitting market participant, and forwards the received orders to the matching engine; and (6) The matching engine evaluates the received orders and matches the first arriving order against the resting opportunity and a trade is executed.

III. ELECTRONIC DATA TRANSACTION REQUEST/RESULT MESSAGES AND MARKET DATA FEEDS

As used herein, a financial message, or an electronic message, refers both to messages communicated by market participants to an electronic trading or market system and vice versa. The messages may be communicated using packets or other techniques operable to communicate information between systems and system components. Some messages may be associated with actions to be taken in the electronic trading or market system. In particular, in one embodiment, upon receipt of a request, a token is allocated and included in a TCP shallow acknowledgment transmission sent back to the participant acknowledging receipt of the request. It should be appreciated that while this shallow acknowledgment is, in some sense, a response to the request, it does not confirm the processing of an order included in the request. The participant, i.e., their device, then sends back a TCP acknowledgment which acknowledges receipt of the shallow acknowledgment and token.

Financial messages communicated to the electronic trading system, also referred to as "inbound" messages, may include associated actions that characterize the messages, such as trader orders, order modifications, order cancellations and the like, as well as other message types. Inbound messages may be sent from client devices associated with market participants, or their representatives, e.g., trade order messages, etc., to an electronic trading or market system. For example, a market participant may submit an electronic message to the electronic trading system that includes an associated specific action to be undertaken by the electronic trading system, such as entering a new trade order into the market or modifying an existing order in the market. In one embodiment, if a participant wishes to modify a previously sent request, e.g., a prior order which has not yet been processed or traded, the participant may send a request message comprising a request to modify the prior request. In one example embodiment, the incoming request itself, e.g., the inbound order entry, may be referred to as an iLink message. iLink is a bidirectional communications/message protocol/message format implemented by the Chicago Mercantile Exchange Inc.

Financial messages communicated from the electronic trading system, referred to as "outbound" messages, may include messages responsive to inbound messages, such as confirmation messages, or other messages such as market update messages, quote messages, and the like. Outbound messages, or electronic data transaction result messages, may be disseminated via data feeds.

Financial messages may further be categorized as having or reflecting an impact on a market or electronic marketplace, also referred to as an "order book" or "book," for a traded product, such as a prevailing price therefore, number of resting orders at various price levels and quantities thereof, etc., or not having or reflecting an impact on a market or a subset or portion thereof. In one embodiment, an electronic order book may be understood to be an electronic collection of the outstanding or resting orders for a financial instrument.

For example, a request to place a trade may result in a response indicative of the trade either being matched with, or being rested on an order book to await, a suitable counter-order. This response may include a message directed solely to the trader who submitted the order to acknowledge receipt of the order and report whether it was matched, and the extent thereto, or rested. The response may further include a message to all market participants reporting a change in the order book due to the order, or an electronic data transaction result message. This response may take the form of a report of the specific change to the order book, e.g., an order for quantity X at price Y was added to the book (referred to, in one embodiment, as a Market By Order message), or may simply report the result, e.g., price level Y now has orders for a total quantity of Z (where Z is the sum of the previous resting quantity plus quantity X of the new order). In some cases, requests may elicit a non-impacting response, such as temporally proximate to the receipt of the request, and then cause a separate market-impact reflecting response at a later time. For example, a stop order, fill or kill order (FOK), also known as an immediate or cancel order, or other conditional request may not have an immediate market impacting effect, if at all, until the requisite conditions are met.

An acknowledgement or confirmation of receipt, e.g., a non-market impacting communication, may be sent to the trader simply confirming that the order was received. Upon the conditions being met and a market impacting result thereof occurring, a market-impacting message may be transmitted as described herein both directly back to the submitting market participant and to all market participants (in a Market By Price "MBP", or Market By Order "MBO"). It should be appreciated that additional conditions may be specified, such as a time or price limit, which may cause the order to be dropped or otherwise canceled and that such an event may result in another non-market-impacting communication instead. In some implementations, market impacting communications may be communicated separately from non-market impacting communications, such as via a separate communications channel or feed.

For additional details and descriptions of different market data feeds, see U.S. Patent Publication No. 2017/0331774, filed on May 16, 2016, entitled "Systems and Methods for Consolidating Multiple Feed Data", assigned to the assignee of the present application, the entirety of which is incorporated by reference herein and relied upon.

It should be further appreciated that various types of market data feeds may be provided which reflect different markets or aspects thereof. Market participants may then, for example, subscribe to receive those feeds of interest to them. For example, data recipient computing systems may choose to receive one or more different feeds. As market impacting communications usually tend to be more important to market participants than non-impacting communications, this separation may reduce congestion and/or noise among those communications having or reflecting an impact on a market or portion thereof. Furthermore, a particular market data feed may only communicate information related to the top buy/sell prices for a particular product, referred to as "top of book" feed, e.g., only changes to the top 10 price levels are communicated. Such limitations may be implemented to reduce consumption of bandwidth and message generation resources. In this case, while a request message may be considered market-impacting if it affects a price level other than the top buy/sell prices, it will not result in a message being sent to the market participants.

Examples of the various types of market data feeds which may be provided by electronic trading systems, such as the CME, in order to provide different types or subsets of market information or to provide such information in different formats include Market By Order, Market Depth (also known as Market by Price to a designated depth of the book), e.g., CME offers a 10-deep market by price feed, Top of Book (a single depth Market by Price feed), and combinations thereof. There may also be all manner of specialized feeds in terms of the content, i.e., providing, for example, derived data, such as a calculated index.

Market data feeds may be characterized as providing a "view" or "overview" of a given market, an aggregation or a portion thereof or changes thereto. For example, a market data feed, such as a Market By Price ("MBP") feed, may convey, with each message, the entire/current state of a market, or portion thereof, for a particular product as a result of one or more market impacting events. For example, an MBP message may convey a total quantity of resting buy/sell orders at a particular price level in response to a new order being placed at that price. An MBP message may convey a quantity of an instrument which was traded in response to an incoming order being matched with one or more resting orders. MBP messages may only be generated for events affecting a portion of a market, e.g., only the top 10 resting buy/sell orders and, thereby, only provide a view of that portion. As used herein, a market impacting request may be said to impact the "view" of the market as presented via the market data feed.

An MBP feed may utilize different message formats for conveying different types of market impacting events. For example, when a new order is rested on the order book, an MBP message may reflect the current state of the price level to which the order was added, e.g., the new aggregate quantity and the new aggregate number of resting orders. As can be seen, such a message conveys no information about the individual resting orders, including the newly rested order, themselves to the market participants. Only the submitting market participant, who receives a separate private message acknowledging the event, knows that it was their order that was added to the book. Similarly, when a trade occurs, an MBP message may be sent which conveys the price at which the instrument was traded, the quantity traded and the number of participating orders, but may convey no information as to whose particular orders contributed to the trade. MBP feeds may further batch reporting of multiple events, i.e., report the result of multiple market impacting events in a single message.

Alternatively, a market data feed, referred to as a Market By Order ("MBO") feed, may convey data reflecting a change that occurred to the order book rather than the result of that change, e.g., that order ABC for quantity X was added to price level Y or that order ABC and order XYZ traded a quantity X at a price Y. In this case, the MBO message identifies only the change that occurred so a market participant wishing to know the current state of the order book must maintain their own copy and apply the change reflected in the message to know the current state. As can be seen, MBO messages may carry much more data than MBP messages because MBO messages reflect information about each order, whereas MBP messages contain information about orders affecting some predetermined value levels. Furthermore, because specific orders, but not the submitting traders thereof, are identified, other market participants may be able to follow that order as it progresses through the market, e.g., as it is modified, canceled, traded, etc.

It should be appreciated that the number, type and manner of market data feeds provided by an electronic trading system are implementation dependent and may vary depending upon the types of products traded by the electronic trading system, customer/trader preferences, bandwidth and data processing limitations, etc. and that all such feeds, now available or later developed, are contemplated herein. MBP and MBO feeds may refer to categories/variations of market data feeds, distinguished by whether they provide an indication of the current state of a market resulting from a market impacting event (MBP) or an indication of the change in the current state of a market due to a market impacting event (MBO).

Messages, whether MBO or MBP, generated responsive to market impacting events which are caused by a single order, such as a new order, an order cancellation, an order modification, etc., are fairly simple and compact and easily created and transmitted. However, messages, whether MBO or MBP, generated responsive to market impacting events which are caused by more than one order, such as a trade, may require the transmission of a significant amount of data to convey the requisite information to the market participants. For trades involving a large number of orders, e.g., a buy order for a quantity of 5000 which matches 5000 sell orders each for a quantity of 1, a significant amount of information may need to be sent, e.g., data indicative of each of the 5000 trades that have participated in the market impacting event.

In one embodiment, an exchange computing system may generate multiple order book objects, one for each type of view that is published or provided. For example, the system may generate an MBO book object and an MBP book object. It should be appreciated that each book object, or view for a product or market, may be derived from the MBO book object, which includes all the orders for a given financial product or market.

An inbound message may include an order that affects the MBO book object, the MBP book object, or both. An outbound message may include data from one or more of the structures within the exchange computing system, e.g., the MBO book object queues or the MBP book object queues.

Furthermore, each participating trader needs to receive a notification that their particular order has traded. Continuing with the example, this may require sending 5001 individual trade notification messages, or even 10,000+ messages where each contributing side (buy vs. sell) is separately reported, in addition to the notification sent to all of the market participants.

The disclosed embodiments may be applicable to the use of either an MBP market data feed and/or an MBO market data feed.

## IV. MATCHING AND TRANSACTION PROCESSING

Market participants, e.g., traders, use software to send orders or messages to the trading platform. The order identifies the product, the quantity of the product the trader wishes to trade, a price at which the trader wishes to trade the product, and a direction of the order (i.e., whether the order is a bid, i.e., an offer to buy, or an ask, i.e., an offer to sell). It will be appreciated that there may be other order types or messages that traders can send including requests to modify or cancel a previously submitted order.

The exchange computer system monitors incoming orders received thereby and attempts to identify, i.e., match or allocate, as described herein, one or more previously received, but not yet matched, orders, i.e., limit orders to buy or sell a given quantity at a given price, referred to as "resting" orders, stored in an order book database, wherein each identified order is contra to the incoming order and has a favorable price relative to the incoming order. An incoming order may be an "aggressor" order, i.e., a market order to sell a given quantity at whatever may be the current resting bid order price(s) or a market order to buy a given quantity at whatever may be the current resting ask order price(s). An incoming order may be a "market making" order, i.e., a market order to buy or sell at a price for which there are currently no resting orders. In particular, if the incoming order is a bid, i.e., an offer to buy, then the identified order(s) will be an ask, i.e., an offer to sell, at a price that is identical to or higher than the bid price. Similarly, if the incoming order is an ask, i.e., an offer to sell, the identified order(s) will be a bid, i.e., an offer to buy, at a price that is identical to or lower than the offer price.

An exchange computing system may receive conditional orders or messages for a financial product, where the order may include two prices or values: a reference value and a stop value. A conditional order may be configured so that when a product trades at the reference price, the stop order is activated at the stop value. For example, if the exchange computing system's order management module (described below) includes a stop order with a stop price of 5 and a limit price of 1 for a product, and a trade at 5 (i.e., the stop price of the stop order) occurs, then the exchange computing system attempts to trade at 1 (i.e., the limit price of the stop order). In other words, a stop order is a conditional order to trade (or execute) at the limit price that is triggered (or elected) when a trade at the stop price occurs.

Stop orders also rest on, or are maintained in, an order book to monitor for a trade at the stop price, which triggers an attempted trade at the limit price. In some embodiments, a triggered limit price for a stop order may be treated as an incoming order.

Upon identification (matching) of a contra order(s), a minimum of the quantities associated with the identified order and the incoming order is matched and that quantity of each of the identified and incoming orders become two halves of a matched trade that is sent to a clearing house. The exchange computer system considers each identified order in this manner until either all of the identified orders have been considered or all of the quantity associated with the incoming order has been matched, i.e., the order has been filled. If any quantity of the incoming order remains, an entry may be created in the order book database and information regarding the incoming order is recorded therein, i.e., a resting order is placed on the order book for the remaining quantity to await a subsequent incoming order counter thereto.

It should be appreciated that in electronic trading systems implemented via an exchange computing system, a trade price (or match value) may differ from (i.e., be better for the submitter, e.g., lower than a submitted buy price or higher than a submitted sell price) the limit price that is submitted, e.g., a price included in an incoming message, or a triggered limit price from a stop order.

As used herein, "better" than a reference value means lower than the reference value if the transaction is a purchase (or acquire) transaction, and higher than the reference value if the transaction is a sell transaction. Said another way, for purchase (or acquire) transactions, lower values are better, and for sell (or relinquish) transactions, higher values are better.

Traders access the markets on a trading platform using trading software that receives and displays at least a portion of the order book for a market, i.e., at least a portion of the currently resting orders, enables a trader to provide parameters for an order for the product traded in the market, and transmits the order to the exchange computer system. The trading software typically includes a graphical user interface to display at least a price and quantity of some of the entries in the order book associated with the market. The number of entries of the order book displayed is generally preconfigured by the trading software, limited by the exchange computer system, or customized by the user. Some graphical user interfaces display order books of multiple markets of one or more trading platforms. The trader may be an individual who trades on his/her behalf, a broker trading on behalf of another person or entity, a group, or an entity. Furthermore, the trader may be a system that automatically generates and submits orders.

If the exchange computer system identifies that an incoming market order may be filled by a combination of multiple resting orders, e.g., the resting order at the best price only partially fills the incoming order, the exchange computer system may allocate the remaining quantity of the incoming, i.e., that which was not filled by the resting order at the best price, among such identified orders in accordance with prioritization and allocation rules/algorithms, referred to as "allocation algorithms" or "matching algorithms," as, for example, may be defined in the specification of the particular financial product or defined by the exchange for multiple financial products. Similarly, if the exchange computer system identifies multiple orders contra to the incoming limit order and that have an identical price which is favorable to the price of the incoming order, i.e., the price is equal to or better, e.g., lower if the incoming order is a buy (or instruction to purchase, or instruction to acquire) or higher if the incoming order is a sell (or instruction to relinquish), than the price of the incoming order, the exchange computer system may allocate the quantity of the incoming order among such identified orders in accordance with the matching algorithms as, for example, may be defined in the specification of the particular financial product or defined by the exchange for multiple financial products.

An exchange responds to inputs, such as trader orders, cancellation, etc., in a manner as expected by the market participants, such as based on market data, e.g., prices, available counter-orders, etc., to provide an expected level of certainty that transactions will occur in a consistent and predictable manner and without unknown or unascertainable risks. Accordingly, the method by which incoming orders are matched with resting orders must be defined so that market participants have an expectation of what the result will be when they place an order or have resting orders and an incoming order is received, even if the expected result is, in fact, at least partially unpredictable due to some component of the process being random or arbitrary or due to market participants having imperfect or less than all information, e.g., unknown position of an order in an order book. Typically, the exchange defines the matching/allocation algorithm that will be used for a particular financial product, with or without input from the market participants. Once defined for a particular product, the matching/allocation algorithm is typically not altered, except in limited circumstance, such as to correct errors or improve operation, so as not to disrupt trader expectations. It will be appreciated that different products offered by a particular exchange may use different matching algorithms.

For example, a first-in/first-out (FIFO) matching algorithm, also referred to as a "Price Time" algorithm, considers each identified order sequentially in accordance with when the identified order was received. The quantity of the incoming order is matched to the quantity of the identified order at the best price received earliest, then quantities of the next earliest best price orders, and so on until the quantity of the incoming order is exhausted. Some product specifications define the use of a pro-rata matching algorithm, wherein a quantity of an incoming order is allocated to each of plurality of identified orders proportionally. Some exchange computer systems provide a priority to certain standing orders in particular markets. An example of such an order is the first order that improves a price (i.e., improves the market) for the product during a trading session. To be given priority, the trading platform may require that the quantity associated with the order is at least a minimum quantity. Further, some exchange computer systems cap the quantity of an incoming order that is allocated to a standing order on the basis of a priority for certain markets. In addition, some exchange computer systems may give a preference to orders submitted by a trader who is designated as a market maker for the product. Other exchange computer systems may use other criteria to determine whether orders submitted by a particular trader are given a preference. Typically, when the exchange computer system allocates a quantity of an incoming order to a plurality of identified orders at the same price, the trading host allocates a quantity of the incoming order to any orders that have been given priority. The exchange computer system thereafter allocates any remaining quantity of the incoming order to orders submitted by traders designated to have a preference, and then allocates any still remaining quantity of the incoming order using the FIFO or pro-rata algorithms. Pro-rata algorithms used in some markets may require that an allocation provided to a particular order in accordance with the pro-rata algorithm must meet at least a minimum allocation quantity. Any orders that do not meet or exceed the minimum allocation quantity are allocated to on a FIFO basis after the pro-rata allocation (if any quantity of the incoming order remains). More information regarding order allocation may be found in U.S. Patent No. 7,853,499, the entirety of which is incorporated by reference herein and relied upon.

Other examples of matching algorithms which may be defined for allocation of orders of a particular financial product include: Price Explicit Time; Order Level Pro Rata; Order Level Priority Pro Rata; Preference Price Explicit Time; Preference Order Level Pro Rata; Preference Order Level Priority Pro Rata; Threshold Pro-Rata; Priority Threshold Pro-Rata; Preference Threshold Pro-Rata; Priority Preference Threshold Pro-Rata; and Split Price-Time Pro-Rata, which are described in U.S. Patent Application Serial No. 13/534,499, filed on Jun. 27, 2012, entitled "Multiple Trade Matching Algorithms," published as U.S. Patent Application Publication No. 2014/0006243 A1, the entirety of which is incorporated by reference herein and relied upon.

With respect to resting orders, allocation/matching suitable resting orders to match against an incoming order may be performed, as described herein, in many different ways. Generally, it will be appreciated that allocation/matching algorithms are only needed when the incoming order quantity is less than the total quantity of the suitable resting orders as, only in this situation, is it necessary to decide which resting order(s) will not be fully satisfied, which trader(s) will not get their orders filled. It can be seen from the above descriptions of the matching/allocation algorithms, that they fall generally into three categories: time priority/first-in-first-out ("FIFO"), pro rata, or a hybrid of FIFO and pro rata.

FIFO generally rewards the first trader to place an order at a particular price and maintains this reward indefinitely. So, if a trader is the first to place an order at price X, no matter how long that order rests and no matter how many orders may follow at the same price, as soon as a suitable incoming order is received, that first trader will be matched first. This "first mover" system may commit other traders to positions in the queue after the first move traders. Furthermore, while it may be beneficial to give priority to a trader who is first to place an order at a given price because that trader is, in effect, taking a risk, the longer that the trader's order rests, the less beneficial it may be. For instance, it could deter other traders from adding liquidity to the marketplace at that price because they know the first mover (and potentially others) already occupies the front of the queue.

With a pro rata allocation, incoming orders are effectively split among suitable resting orders. This provides a sense of fairness in that everyone may get some of their order filled. However, a trader who took a risk by being first to place an order (a "market turning" order) at a price may end up having to share an incoming order with a much later submitted order. Furthermore, as a pro rata allocation distributes the incoming order according to a proportion based on the resting order quantities, traders may place orders for large quantities, which they are willing to trade but may not necessarily want to trade, in order to increase the proportion of an incoming order that they will receive. This results in an escalation of quantities on the order book and exposes a trader to a risk that someone may trade against one of these orders and subject the trader to a larger trade than they intended. In the typical case, once an incoming order is allocated against these large resting orders, the traders subsequently cancel the remaining resting quantity which may frustrate other traders. Accordingly, as FIFO and pro rata both have benefits and problems, exchanges may try to use hybrid allocation/matching algorithms which attempt to balance these benefits and problems by combining FIFO and pro rata in some manner. However, hybrid systems define conditions or fixed rules to determine when FIFO should be used and when pro rata should be used. For example, a fixed percentage of an incoming order may be allocated using a FIFO mechanism with the remainder being allocated pro rata.

V. CLEARING HOUSE

The clearing house of an exchange clears, settles and guarantees matched transactions in contracts occurring through the facilities of the exchange. In addition, the clearing house establishes and monitors financial requirements for clearing members and conveys certain clearing privileges in conjunction with the relevant exchange markets. The clearing house also regulates the delivery process.

The clearing house establishes clearing level performance bonds (margins) for all products of the exchange and establishes minimum performance bond requirements for customers of such products. A performance bond, also referred to as a margin requirement, corresponds with the funds that must be deposited by a customer with his or her broker, by a broker with a clearing member or by a clearing member with the clearing house, for the purpose of insuring the broker or clearing house against loss on open futures or options contracts. This is not a part payment on a purchase. The performance bond helps to ensure the financial integrity of brokers, clearing members and the exchange as a whole. The performance bond refers to the minimum dollar deposit required by the clearing house from clearing members in accordance with their positions. Maintenance, or maintenance margin, refers to a sum, usually smaller than the initial performance bond, which must remain on deposit in the customer's account for any position at all times. The initial margin is the total amount of margin per contract required by the broker when a futures position is opened. A drop in funds below this level requires a deposit back to the initial margin levels, i.e., a performance bond call. If a customer's equity in any futures position drops to or under the maintenance level because of adverse price action, the broker must issue a performance bond/margin call to restore the customer's equity. A performance bond call, also referred to as a margin call, is a demand for additional funds to bring the customer's account back up to the initial performance bond level whenever adverse price movements cause the account to go below the maintenance.

The exchange derives its financial stability in large part by removing debt obligations among market participants as they occur. This is accomplished by determining a settlement price at the close of the market each day for each contract and marking all open positions to that price, referred to as "mark to market." Every contract is debited or credited based on that trading session's gains or losses. As prices move for or against a position, funds flow into and out of the trading account. In the case of the CME, each business day by 6:40 a.m. Chicago time, based on the mark-to-the-market of all open positions to the previous trading day's settlement price, the clearing house pays to or collects cash from each clearing member. This cash flow, known as settlement variation, is performed by CME's settlement banks based on instructions issued by the clearing house. All payments to and collections from clearing members are made in "same-day" funds. In addition to the 6:40 a.m. settlement, a daily intra-day mark-to-the market of all open positions, including trades executed during the overnight GLOBEX®, the CME's electronic trading systems, trading session and the current day's trades matched before 11:15 a.m., is performed using current prices. The resulting cash payments are made intra-day for same day value. In times of extreme price volatility, the clearing house has the authority to perform additional intra-day mark-to-the-market calculations on open positions and to call for immediate payment of settlement variation. CME's mark-to-the-market settlement system may differ from the settlement systems implemented by many other financial markets, including the interbank, Treasury securities, over-the-counter foreign exchange and debt, options, and equities markets, where participants regularly assume credit exposure to each other. In those markets, the failure of one participant can have a ripple effect on the solvency of the other participants. Conversely, CME's mark-to-the-market system may not allow losses to accumulate over time or allow a market participant the opportunity to defer losses associated with market positions.

While the disclosed embodiments may be described in reference to the CME, it should be appreciated that these embodiments are applicable to any exchange. Such other exchanges may include a clearing house that, like the CME clearing house, clears, settles and guarantees all matched transactions in contracts of the exchange occurring through its facilities. In addition, such clearing houses establish and monitor financial requirements for clearing members and convey certain clearing privileges in conjunction with the relevant exchange markets.

The disclosed embodiments are also not limited to uses by a clearing house or exchange for purposes of enforcing a performance bond or margin requirement. For example, a market participant may use the disclosed embodiments in a simulation or other analysis of a portfolio. In such cases, the settlement price may be useful as an indication of a value at risk and/or cash flow obligation rather than a performance bond. The disclosed embodiments may also be used by market participants or other entities to forecast or predict the effects of a prospective position on the margin requirement of the market participant.

Clearing houses, like the CME clearing house may specify the conditions of delivery for the contracts they cover. The exchange designates warehouse and delivery locations for many commodities. When delivery takes place, a warrant or bearer receipt that represents a certain quantity and quality of a commodity in a specific location changes hands from the seller to the buyer who then makes full payment. The buyer has the right to remove the commodity from the warehouse or has the option of leaving the commodity at the storage facility for a periodic fee. The buyer could also arrange with the warehouse to transport the commodity to another location of his or her choice, including his or her home, and pays any transportation fees. In addition to delivery specifications stipulated by the exchanges, the quality, grade, or nature of the underlying asset to be delivered are also regulated by the exchanges.

The delivery process may involve several deadlines that are handled by the Exchange clearinghouse. Different commodities may include different parameters and timing for delivery. The first deadline of an example delivery process is called position day. This is the day that the short position holder in the market indicates to the exchange clearinghouse that the holder intends to make delivery on his futures position and provides shipping information in the clearing delivery system. Also, starting on the first position day, each clearing member or market participant must report all of their open long positions to the clearinghouse. The clearinghouse ranks the long positions according to the amount of time they have been open and assigns the oldest long position to the short position holder that has given his intention to deliver.

At a second deadline, referred to as notice day, the short position holder and long position holder receive notification that they have been matched, and the long position holder receives an invoice from the clearinghouse. In some cases, the notice day is the time at which the disclosed methods and systems adjust a party's physical position and address an offset from another party's position via cash settlement as described herein. A third deadline is the actual delivery day. The long position holder makes payment to clearinghouse, and the clearinghouse simultaneously transfers the payment from the long to the short position holder, and transfers the shipping certificate from the short to the long position holder. Now the long position holder is the owner of the shipping certificate and the participant has several options. In an example of grain, the participant can hold the certificate indefinitely, but must pay the warehouse that issued the certificate storage charges, that are collected and distributed monthly by the clearing house. The participant can cancel the shipping certificate and order the issuing warehouse to load-out the physical commodity into a conveyance that he places at the issuing warehouse. The participant can transfer or sell the certificate to someone else. Or the participant can go back into the futures market and open a new position by selling futures, in which case he now becomes the short position holder. The participant may then initiate a new three-day delivery process, that would entail re-delivery of the warehouse certificate the participant now owns. During this time, the participant will continue to pay storage charges to the warehouse until he actually re-delivers the certificate.

As discussed herein, the disclosed embodiments may use the settlement prices, along with other market data for a target futures contract, to determine a tracking value. The value of a tracking financial instrument may be based on the tracking value, whereby trading the tracking financial instrument enables a trader to avoid many of the complications (e.g., computational, logistical, etc.) associated with trading a traditional futures contract.

VI. COMPUTING ENVIRONMENT

The embodiments may be described in terms of a distributed computing system. The particular examples identify a specific set of components useful in a futures and options exchange. However, many of the components and inventive features are readily adapted to other electronic trading environments. The specific examples described herein may teach specific protocols and/or interfaces, although it should be understood that the principles involved may be extended to, or applied in, other protocols and interfaces.

It should be appreciated that the plurality of entities utilizing or involved with the disclosed embodiments, e.g., the market participants, may be referred to by other nomenclature reflecting the role that the particular entity is performing with respect to the disclosed embodiments and that a given entity may perform more than one role depending upon the implementation and the nature of the particular transaction being undertaken, as well as the entity's contractual and/or legal relationship with another market participant and/or the exchange.

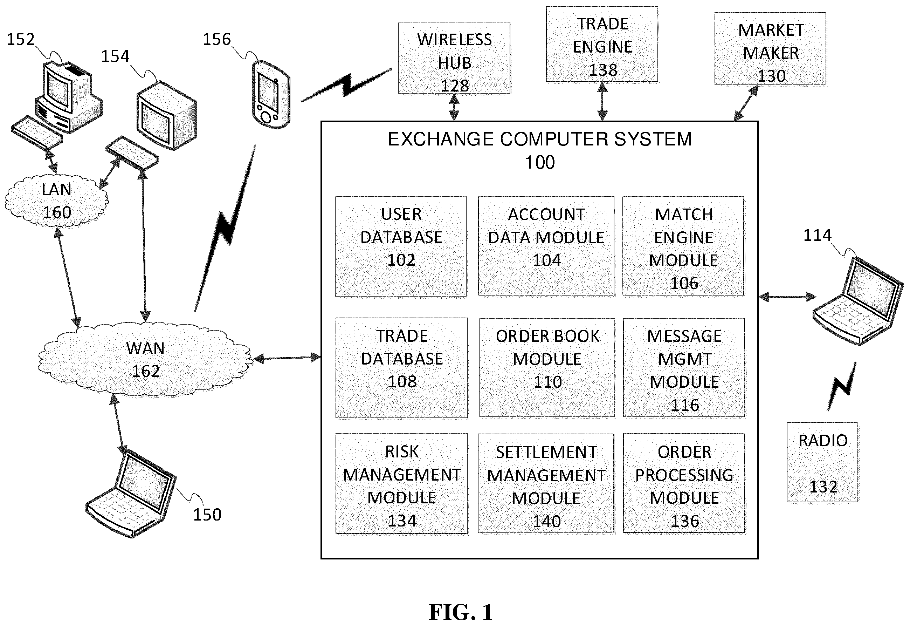

An example trading network environment for implementing trading systems and methods is shown in Fig. 1. An exchange computer system 100 receives messages that include orders and transmits market data related to orders and trades to users, such as via wide area network 162 and/or local area network 160 and computer devices 114, 150, 152, 154 and 156, as described herein, coupled with the exchange computer system 100.

Herein, the phrase "coupled with" is defined to mean directly connected to or indirectly connected through one or more intermediate components. Such intermediate components may include both hardware and software based components. Further, to clarify the use in the pending claims and to hereby provide notice to the public, the phrases "at least one of <A>, <B>, ... and <N>" or "at least one of <A>, <B>, ... <N>, or combinations thereof" are defined by the Applicant in the broadest sense, superseding any other implied definitions herebefore or hereinafter unless expressly asserted by the Applicant to the contrary, to mean one or more elements selected from the group comprising A, B, ... and N, that is to say, any combination of one or more of the elements A, B, ... or N including any one element alone or in combination with one or more of the other elements which may also include, in combination, additional elements not listed.

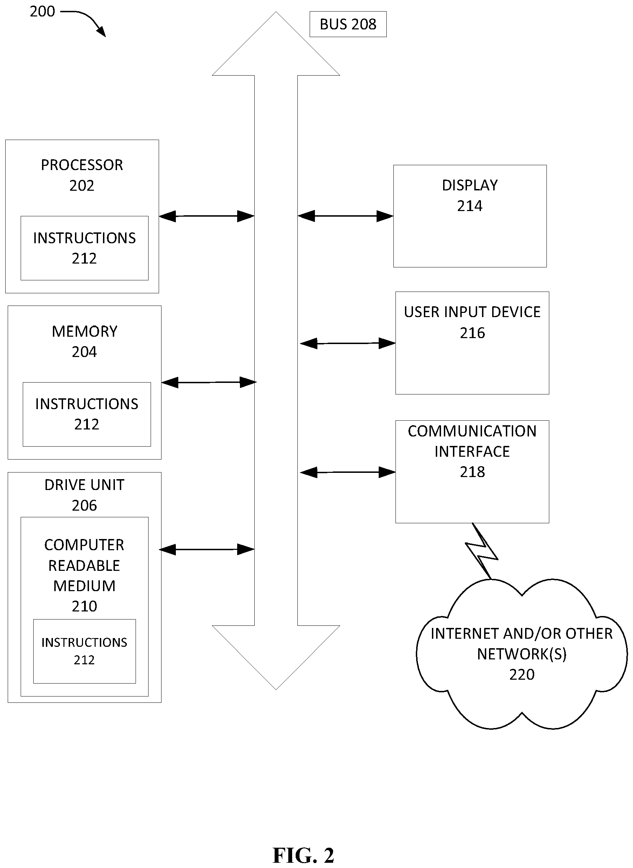

The exchange computer system 100 may be implemented with one or more mainframe, desktop or other computers, such as the example computer 200 described herein with respect to Fig. 2. A user database 102 may be provided which includes information identifying traders and other users of exchange computer system 100, such as account numbers or identifiers, user names and passwords. An account data module 104 may be provided which may process account information that may be used during trades.

A match engine module 106 may be included to match bid and offer prices and may be implemented with software that executes one or more algorithms for matching bids and offers. A trade database 108 may be included to store information identifying trades and descriptions of trades. In particular, trade database 108 may store information identifying the time that a trade took place and the contract price.

An order book module 110 may be included to compute or otherwise determine current bid and offer prices, e.g., in a continuous auction market, or also operate as an order accumulation buffer for a batch auction market.

A market data module may be included to collect market data and prepare the data for transmission to users. For example, the market data module may prepare the market data feeds described herein.

A risk management module 134 may be included to compute and determine a user's risk utilization in relation to the user's defined risk thresholds. The risk management module 134 may also be configured to determine risk assessments or exposure levels in connection with positions held by a market participant. The risk management module 134 may be configured to administer, manage or maintain one or more margining mechanisms implemented by the exchange computer system 100. Such administration, management or maintenance may include managing a number of database records reflective of margin accounts of the market participants. In some embodiments, the risk management module 134 implements one or more aspects of the disclosed embodiments, including, for instance, principal component analysis (PCA) based margining, in connection with interest rate swap (IRS) portfolios, as described herein.

A message management module 116 may be included to, among other things, receive, and extract orders from, electronic data transaction request messages. The message management module 116 may define a point of ingress into the exchange computer system 100 where messages are ordered and considered to be received by the system. This may be considered a point of determinism in the exchange computer system 100 that defines the earliest point where the system can ascribe an order of receipt to arriving messages. The point of determinism may or may not be at or near the demarcation point between the exchange computer system 100 and a public/internet network infrastructure. The message management module 116 processes messages by interpreting the contents of a message based on the message transmit protocol, such as the transmission control protocol ("TCP"), to provide the content of the message for further processing by the exchange computer system.

The message management module 116 may also be configured to detect characteristics of an order for a transaction to be undertaken in an electronic marketplace. For example, the message management module 116 may identify and extract order content such as a price, product, volume, and associated market participant for an order. The message management module 116 may also identify and extract data indicating an action to be executed by the exchange computer system 100 with respect to the extracted order. For example, the message management module 116 may determine the transaction type of the transaction requested in a given message. A message may include an instruction to perform a type of transaction. The transaction type may be, in one embodiment, a request/offer/order to either buy or sell a specified quantity or units of a financial instrument at a specified price or value. The message management module 116 may also identify and extract other order information and other actions associated with the extracted order. All extracted order characteristics, other information, and associated actions extracted from a message for an order may be collectively considered an order as described and referenced herein.

Order or message characteristics may include, for example, the state of the system after a message is received, arrival time (e.g., the time a message arrives at the Market Segment Gateway ("MSG") that is the point of ingress/entry and/or egress/departure for all transactions, i.e., the network traffic/packets containing the data therefore), message type (e.g., new, modify, cancel), and the number of matches generated by a message. Order or message characteristics may also include market participant side (e.g., buyer or seller) or time in force (e.g., a good until end of day order that is good for the full trading day, a good until canceled ordered that rests on the order book until matched, or a fill or kill order that is canceled if not filled immediately, or a fill and kill order (FOK) that is filled to the maximum amount possible based on the state of the order book at the time the FOK order is processed, and any remaining or unfilled/unsatisfied quantity is not stored on the books or allowed to rest).

An order processing module 136 may be included to decompose delta-based, spread instrument, bulk and other types of composite orders for processing by the order book module 110 and/or the match engine module 106. The order processing module 136 may also be used to implement one or more procedures related to clearing an order. The order may be communicated from the message management module 116 to the order processing module 136. The order processing module 136 may be configured to interpret the communicated order, and manage the order characteristics, other information, and associated actions as they are processed through an order book module 110 and eventually transacted on an electronic market. For example, the order processing module 136 may store the order characteristics and other content and execute the associated actions. In an embodiment, the order processing module 136 may execute an associated action of placing the order into an order book for an electronic trading system managed by the order book module 110. In an embodiment, placing an order into an order book and/or into an electronic trading system may be considered a primary action for an order. The order processing module 136 may be configured in various arrangements, and may be configured as part of the order book module 110, part of the message management module 116, or as an independent functioning module.

As an intermediary to electronic trading transactions, the exchange bears a certain amount of risk in each transaction that takes place. To that end, the clearing house implements risk management mechanisms to protect the exchange. One or more of the modules of the exchange computer system 100, for example, settlement module 140, may be configured to determine settlement prices for constituent contracts, such as deferred month contracts, of spread instruments.. The settlement module 140 (or settlement processor or other payment processor) may be included to provide one or more functions related to settling or otherwise administering transactions cleared by the exchange. Settlement module 140 of the exchange computer system 100 may implement one or more settlement price determination techniques. Settlement-related functions need not be limited to actions or events occurring at the end of a contract term. For instance, in some embodiments, settlement-related functions may include or involve daily or other mark to market settlements for margining purposes. In some cases, the settlement module 140 may be configured to communicate with the trade database 108 (or the memory(ies) on which the trade database 108 is stored) and/or to determine a payment amount based on a spot price, the price of the futures contract or other financial instrument, or other price data, at various times. The determination may be made at one or more points in time during the term of the financial instrument in connection with a margining mechanism. For example, the settlement module 140 may be used to determine a mark to market amount on a daily basis during the term of the financial instrument. Such determinations may also be made on a settlement date for the financial instrument for the purposes of final settlement.

In some embodiments, the settlement module 140 may be integrated to any desired extent with one or more of the other modules or processors of the exchange computer system 100. For example, the settlement module 140 and the risk management module 134 may be integrated to any desired extent. In some cases, one or more margining procedures or other aspects of the margining mechanism(s) may be implemented by the settlement module 140.

One or more of the above-described modules of the exchange computer system 100 may be used to gather or obtain data to support the settlement price determination, as well as a subsequent margin requirement determination. For example, the order book module 110 and/or the market data module 112 may be used to receive, access, or otherwise obtain market data, such as bid-offer values of orders currently on the order books. The trade database 108 may be used to receive, access, or otherwise obtain trade data indicative of the prices and volumes of trades that were recently executed in a number of markets. In some cases, transaction data (and/or bid/ask data) may be gathered or obtained from open outcry pits and/or other sources and incorporated into the trade and market data from the electronic trading system(s). It should be appreciated that concurrent processing limits may be defined by or imposed separately or in combination on one or more of the trading system components.

One or more of the above-described modules may implement, in whole or in part, the linking and equivalence procedures of the disclosed methods and systems. The extent to which a respective one of the modules is involved may vary. For instance, the order processing module 136 may be configured or used to collect message data indicative of the positions of the market participants. The order processing module 136 may also be configured or used to determine a cash settlement or offset amount as described herein. Alternatively or additionally, one or more other modules or components (e.g., the settlement management module 140 and/or the match engine module 106) may be configured or used to determine a cash settlement or offset amount as described herein. Alternatively or additionally, the match engine module 106 may be configured or used to match or otherwise link the buy and sell position in accordance with the adjustment technique. These and/or other modules may be involved to any desired extent in implementing the adjustment procedure described herein.

The disclosed mechanisms may be implemented at any logical and/or physical point(s), or combinations thereof, at which the relevant information/data (e.g., message traffic and responses thereto) may be monitored or flows or is otherwise accessible or measurable, including one or more gateway devices, modems, the computers or terminals of one or more market participants, e.g., client computers, etc.

One skilled in the art will appreciate that one or more modules described herein may be implemented using, among other things, a tangible computer-readable medium comprising computer-executable instructions (e.g., executable software code). Alternatively, modules may be implemented as software code, firmware code, specifically configured hardware or processors, and/or a combination of the aforementioned. For example, the modules may be embodied as part of an exchange 100 for financial instruments. It should be appreciated the disclosed embodiments may be implemented as a different or separate module of the exchange computer system 100, or a separate computer system coupled with the exchange computer system 100 so as to have access to margin account record, pricing, and/or other data. As described herein, the disclosed embodiments may be implemented as a centrally accessible system or as a distributed system, e.g., where some of the disclosed functions are performed by the computer systems of the market participants.

The trading network environment shown in Fig. 1 includes example computer devices 150, 152, 154, and 156, which depict different example methods or media by which a computer device may be coupled with the exchange computer system 100 or by which a user may communicate, e.g., send and receive, trade or other information therewith. It should be appreciated that the types of computer devices deployed by traders and the methods and media by which they communicate with the exchange computer system 100 is implementation dependent and may vary and that not all of the depicted computer devices and/or means/media of communication may be used and that other computer devices and/or means/media of communications, now available or later developed may be used. Each computer device, which may comprise a computer 200 described in more detail with respect to Fig. 2, may include a central processor, specifically configured or otherwise, that controls the overall operation of the computer and a system bus that connects the central processor to one or more conventional components, such as a network card or modem. Each computer device may also include a variety of interface units and drives for reading and writing data or files and communicating with other computer devices and with the exchange computer system 100. Depending on the type of computer device, a user can interact with the computer with a keyboard, pointing device, microphone, pen device or other input device now available or later developed.

An example computer device 114 is shown directly connected to exchange computer system 100, such as via a T1 line, a common local area network (LAN) or other wired and/or wireless medium for connecting computer devices, such as the network 220 shown in Fig. 2 and described with respect thereto. The example computer device 114 is further shown connected to a radio 132. The user of radio 132, which may include a cellular telephone, smart phone, or other wireless proprietary and/or non-proprietary device, may be a trader or exchange employee. The radio user may transmit orders or other information to the example computer device 114 or a user thereof. The user of the example computer device 114, or the example computer device 114 alone and/or autonomously, may then transmit the trade or other information to the exchange computer system 100.

Example computer devices 152 and 154 are coupled with a local area network ("LAN") 160 which may be configured in one or more of the well-known LAN topologies, e.g., star, daisy chain, etc., and may use a variety of different protocols, such as Ethernet, TCP/IP, etc. The example computer devices 152 and 154 may communicate with each other and with other computer and other devices which are coupled with the LAN 160. Computer and other devices may be coupled with the LAN 160 via twisted pair wires, coaxial cable, fiber optics or other wired or wireless media. As shown in Fig. 1, an example wireless personal digital assistant device ("PDA") 156, such as a mobile telephone, tablet based compute device, or other wireless device, may communicate with the LAN 160 and/or the Internet 162 via radio waves, such as via WiFi, Bluetooth and/or a cellular telephone based data communications protocol. PDA 156 may also communicate with exchange computer system 100 via a conventional wireless hub 128.

Fig. 1 also shows the LAN 160 coupled with a wide area network ("WAN") 162 which may be comprised of one or more public or private wired or wireless networks. In one embodiment, the WAN 162 includes the Internet 162. The LAN 160 may include a router to connect LAN 160 to the Internet 162. Example computer device 156 is shown coupled directly to the Internet 162, such as via a modem, DSL line, satellite dish or any other device for connecting a computer device to the Internet 162 via a service provider therefore as is known. LAN 160 and/or WAN 162 may be the same as the network 220 shown in Fig. 2 and described with respect thereto.

Users of the exchange computer system 100 may include one or more market makers 130, which may maintain a market by providing constant bid and offer prices for a derivative or security to the exchange computer system 100, such as via one of the example computer devices depicted. The exchange computer system 100 may also exchange information with other match or trade engines, such as trade engine 138. One skilled in the art will appreciate that numerous additional computers and systems may be coupled to exchange computer system 100. Such computers and systems may include clearing, regulatory and fee systems.

The operations of computer devices and systems shown in Fig. 1 may be controlled by computer-executable instructions stored on a non-transitory computer-readable medium. For example, the example computer device 152 may store computer-executable instructions for receiving order information from a user, transmitting that order information to exchange computer system 100 in electronic messages, extracting the order information from the electronic messages, executing actions relating to the messages, and/or calculating values from characteristics of the extracted order to facilitate matching orders and executing trades. In another example, the example computer device 150 may include computer-executable instructions for receiving market data from exchange computer system 100 and displaying that information to a user.

Numerous additional servers, computers, handheld devices, personal digital assistants, telephones and other devices may also be connected to exchange computer system 100. Moreover, one skilled in the art will appreciate that the topology shown in Fig. 1 is merely an example and that the components shown in Fig. 1 may include other components not shown and be connected by numerous alternative topologies.

Referring now to Fig. 2, an illustrative embodiment of a general computer system 200 is shown. The computer system 200 may include a set of instructions that are executed to cause the computer system 200 to perform any one or more of the methods or computer based functions disclosed herein. The computer system 200 may operate as a standalone device or may be connected, e.g., using a network, to other computer systems or peripheral devices. Any of the components discussed herein, such as processor 202, may be a computer system 200 or a component in the computer system 200. The computer system 200 may be specifically configured to implement a match engine, margin processing, payment, clearing, or other function on behalf of an exchange, such as the Chicago Mercantile Exchange, of which the disclosed embodiments are a component thereof.

In a networked deployment, the computer system 200 may operate in the capacity of a server or as a client user computer in a client-server user network environment, or as a peer computer system in a peer-to-peer (or distributed) network environment. The computer system 200 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular embodiment, the computer system 200 may be implemented using electronic devices that provide voice, video or data communication. Further, while a single computer system 200 is illustrated, the term "system" shall also be taken to include any collection of systems or sub-systems that individually or jointly execute a set, or multiple sets, of instructions to perform one or more computer functions.

As illustrated in Fig. 2, the computer system 200 may include a processor 202, e.g., a central processing unit (CPU), a graphics processing unit (GPU), or both. The processor 202 may be a component in a variety of systems. For example, the processor 202 may be part of a standard personal computer or a workstation. The processor 202 may be or include one or more general processors, digital signal processors, specifically configured processors, application specific integrated circuits, field programmable gate arrays, servers, networks, digital circuits, analog circuits, combinations thereof, or other now known or later developed devices for analyzing and processing data. The processor 202 may implement a software program, such as code generated manually (i.e., programmed).

The computer system 200 may include a memory 204 that can communicate via a bus 208. The memory 204 may be a main memory, a static memory, or a dynamic memory. The memory 204 may include, but is not limited to, computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one embodiment, the memory 204 includes a cache or random access memory for the processor 202. In alternative embodiments, the memory 204 is separate from the processor 202, such as a cache memory of a processor, the system memory, or other memory. The memory 204 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 204 is operable to store instructions executable by the processor 202. The functions, acts or tasks illustrated in the figures or described herein may be performed by the programmed processor 202 executing the instructions 212 stored in the memory 204. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the computer system 200 may further include a display unit 214, such as a liquid crystal display (LCD), an organic light emitting diode (OLED), a flat panel display, a solid state display, a cathode ray tube (CRT), a projector, a printer or other now known or later developed display device for outputting determined information. The display 214 may act as an interface for the user to see the functioning of the processor 202, or specifically as an interface with the software stored in the memory 204 or in the drive unit 206.

Additionally, the computer system 200 may include an input device 216 configured to allow a user to interact with any of the components of system 200. The input device 216 may be a number pad, a keyboard, or a cursor control device, such as a mouse, or a joystick, touch screen display, remote control or any other device operative to interact with the system 200.

In a particular embodiment, as depicted in Fig. 2, the computer system 200 may also include a disk or optical drive unit 206. The disk drive unit 206 may include a computer-readable medium 210 in which one or more sets of instructions 212, e.g., software, may be embedded. Further, the instructions 212 may embody one or more of the methods or logic as described herein. In a particular embodiment, the instructions 212 may reside completely, or at least partially, within the memory 204 and/or within the processor 202 during execution by the computer system 200. The memory 204 and the processor 202 also may include computer-readable media as discussed herein.

The present disclosure contemplates a computer-readable medium that includes instructions 212 or receives and executes instructions 212 responsive to a propagated signal, so that a device connected to a network 220 can communicate voice, video, audio, images or any other data over the network 220. Further, the instructions 212 may be transmitted or received over the network 220 via a communication interface 218. The communication interface 218 may be a part of the processor 202 or may be a separate component. The communication interface 218 may be created in software or may be a physical connection in hardware. The communication interface 218 is configured to connect with a network 220, external media, the display 214, or any other components in system 200, or combinations thereof. The connection with the network 220 may be a physical connection, such as a wired Ethernet connection or may be established wirelessly. Likewise, the additional connections with other components of the system 200 may be physical connections or may be established wirelessly.

The network 220 may include wired networks, wireless networks, or combinations thereof. The wireless network may be a cellular telephone network, an 802.11, 802.16, 802.20, or WiMax network. Further, the network 220 may be a public network, such as the Internet, a private network, such as an intranet, or combinations thereof, and may utilize a variety of networking protocols now available or later developed including, but not limited to, TCP/IP based networking protocols.

Embodiments of the subject matter and the functional operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer program products, i.e., one or more modules of computer program instructions encoded on a computer readable medium for execution by, or to control the operation of, data processing apparatus. While the computer-readable medium is shown to be a single medium, the term "computer-readable medium" includes a single medium or multiple media, such as a centralized or distributed database, and/or associated caches and servers that store one or more sets of instructions. The term "computer-readable medium" shall also include any medium that is capable of storing, encoding or carrying a set of instructions for execution by a processor or that cause a computer system to perform any one or more of the methods or operations disclosed herein. The computer readable medium may be a machine-readable storage device, a machine-readable storage substrate, a memory device, or a combination of one or more of them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

In one non-limiting, example embodiment, the computer-readable medium includes a solid-state memory, such as a memory card or other package that houses one or more non-volatile read-only memories. Further, the computer-readable medium may be a random access memory or other volatile re-writable memory. Additionally, the computer-readable medium may include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative embodiment, dedicated or otherwise specifically configured hardware implementations, such as application specific integrated circuits, programmable logic arrays and other hardware devices, are constructed to implement one or more of the methods described herein. Applications that may include the apparatus and systems of various embodiments can broadly include a variety of electronic and computer systems. One or more embodiments described herein may implement functions using two or more specific interconnected hardware modules or devices with related control and data signals that may be communicated between and through the modules, or as portions of an application-specific integrated circuit. Accordingly, the present system encompasses software, firmware, and hardware implementations.

In accordance with various embodiments of the present disclosure, the methods described herein may be implemented by software programs executable by a computer system. Further, in an example, non-limiting embodiment, implementations include distributed processing, component/object distributed processing, and parallel processing. Alternatively or additionally, virtual computer system processing are constructed to implement one or more of the methods or functionality as described herein.

Although the present specification describes components and functions that may be implemented in particular embodiments with reference to particular standards and protocols, the invention is not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Accordingly, replacement standards and protocols having the same or similar functions as those disclosed herein are considered equivalents thereof.

A computer program (also known as a program, software, software application, script, or code) may be written in any form of programming language, including compiled or interpreted languages, and it may be deployed in any form, including as a standalone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and anyone or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer may be embedded in another device, e.g., a mobile telephone, a personal digital assistant (PDA), a mobile audio player, a Global Positioning System (GPS) receiver, to name just a few. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory may be supplemented by, or incorporated in, special purpose logic circuitry.

As used herein, the terms "microprocessor" or "general-purpose processor" ("GPP") may refer to a hardware device that fetches instructions and data from a memory or storage device and executes those instructions (for example, an Intel Xeon processor or an AMD Opteron processor) to then, for example, process the data in accordance therewith. The term "reconfigurable logic" may refer to any logic technology whose form and function may be significantly altered (i.e., reconfigured) in the field post-manufacture as opposed to a microprocessor, whose function can change post-manufacture, e.g. via computer executable software code, but whose form, e.g. the arrangement/layout and interconnection of logical structures, is fixed at manufacture. The term "software" may refer to data processing functionality that is deployed on a GPP. The term "firmware" may refer to data processing functionality that is deployed on reconfigurable logic. One example of a reconfigurable logic is a field programmable gate array ("FPGA") which is a reconfigurable integrated circuit. An FPGA may contain programmable logic components called "logic blocks", and a hierarchy of reconfigurable interconnects that allow the blocks to be "wired together", somewhat like many (changeable) logic gates that may be inter-wired in (many) different configurations. Logic blocks may be configured to perform complex combinatorial functions, or merely simple logic gates like AND, OR, NOT and XOR. An FPGA may further include memory elements, which may be simple flip-flops or more complete blocks of memory.

To provide for interaction with a user, embodiments of the subject matter described in this specification may be implemented on a device having a display, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices may be used to provide for interaction with a user as well. Feedback provided to the user may be any form of sensory feedback, e.g., visual feedback, auditory feedback, or tactile feedback. Input from the user may be received in any form, including acoustic, speech, or tactile input.

Embodiments of the subject matter described in this specification may be implemented in a computing system that includes a back end component, e.g., a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system may be interconnected by any form or medium of digital data communication, e.g., a communication network. Examples of communication networks include a local area network ("LAN") and a wide area network ("WAN"), e.g., the Internet.

The computing system may include clients and servers. A client and server are generally remote from each other and typically interact through a communication network. The relationship of client and server arises by virtue of computer programs running on the respective computers and having a client-server relationship to each other.

VII. TRANSACTION DATA OBJECTS

Transaction data is stored in data structures as data objects. The data structures may be arranged as a hierarchy of data objects. For instance, a respective data object may be provided for each financial product. Within each such data object, one or more data objects may be defined and stored for the different types of data associated with the financial product. For instance, data objects may be defined for the queues or lists of the order book for the financial product. Other data objects may be defined for each bid, offer, or position, e.g., matched position, related to the financial product.

The data structures in which the data objects are stored may be implemented as a database. The exchange computing system may use a number of databases to record different positions for buying or selling quantities of financial products at specified values. In one embodiment, an exchange computing system may convert all financial instruments to objects. For example, one object may represent the order book for a financial instrument. Moreover, in one embodiment, one object may include or be defined by two queues, one queue for each action that may be performed by a user on the object. For example, an order book converted to an object may be represented by an Ask queue and a Bid queue. Resting messages or orders associated with the respective financial instrument may be stored in the appropriate queue and recalled therefrom.

When the data transaction processing system is implemented as an exchange computing system, as discussed above, different client computers submit electronic data transaction request messages to the exchange computing system. Electronic data transaction request messages include requests to perform a transaction, e.g., at a value for a quantity. The exchange computing system includes a data transaction processor, e.g., a hardware matching processor or match engine, that matches, or attempts to match, pairs of messages with each other. For example, messages may match if they contain counter instructions (e.g., one message includes instructions to buy, the other message includes instructions to sell) for the same product at the same value. In some cases, depending on the nature of the message, the value at which a match occurs may be the submitted value or a better value. A better value may mean higher or lower value depending on the specific transaction requested. For example, a buy order may match at the submitted buy value or a lower (e.g., better) value. A sell order may match at the submitted sell value or a higher (e.g., better) value.

Although described herein in connection with data objects related to positions held in futures contracts, the data objects may be representative of other positions, e.g., other financial products, and other entities. For instance, the disclosed methods and systems may be used to process data objects representative of other types of financial or non-financial positions, such as other property or assets.

VIII. GROSS-UP/GROSS-DOWN POSITION MATCHING

The development of futures benchmarks for energy involves designing a financial contract that replicates the physical characteristics of the underlying market, also called physically-delivered futures. Replication of the underlying market is useful to energy products due to their inherent nature of being intrinsically linked to the physical assets or delivery infrastructure. Also, physically delivered futures go through three steps during their life cycle: financial trading, expiry, and delivery. The last stage may determine the success of the financial product, insofar as it is useful for the delivery mechanism to be aligned with commercial practices. A physically delivered futures product serves two functions: price discovery and convergence. Price convergence means that the futures price reflects demand and supply dynamics and the futures price converges to the cash market price after the contract expires.

CME US LNG Export (USLE) is one example of a financial product to which the disclosed methods and systems may be applied. The USLE product is directed to establishing a price benchmark for the US LNG export market. Other financial products may also benefit from the linking and equivalence provided by the disclosed methods and systems.

One main challenge of developing a benchmark is the standardization of the shipping component. Seaborne transportation comes in different shapes and sizes. For example, LNG ships may be grouped into four main types: (1) Q-Max with capacity over 250,000 cm; (2) Q-Flex, which varies between 200,000 cm to 250,000; (3) Standard, which ranges from 100,000 to 200,000 cm; and, (4) small ships below 100,000 cm. Most of the LNG ships in the Atlantic and Pacific basins belong to the Standard type, which has a wide range. The wide range makes position matching an acute problem.

Under the current clearing model for physically delivered futures, the netted long/short position post-expiry always equates to the commodity volume that goes for delivery (e.g., 1 ton of coal). However, LNG does not as of yet have standardized delivery volume or frequency. The current model accordingly does not support setting a constraint to the optimization/matching process.

The disclosed gross-up/gross-down procedure described herein may allow the allocation and matching of positions post-expiry with consideration to inherent constraints that deliveries can only be performed in specific volumes/quantities, albeit with those specific quantities being non-standardized.

Gross-up/gross-down is procedure to link (e.g., match) positions regardless of cargo size. In the futures context, the procedure includes an optimization of the allocation of long and short positions given the constraint of varying cargo sizes. While the procedure has been developed for CME US LNG Export (USLE), the procedure may be utilized for other financial products or other contexts that operate under certain constraints. Implementation of the procedure ensures equivalency between linked (e.g., matched) positions within specific ranges of cargo size.

The position matching and other equivalency provided by the disclosed methods and systems improves the technical field of data processing. The data processing involved in position matching is made feasible and efficient via the disclosed methods and systems. For instance, both feasibility and efficiency are improved by providing one or more constraints on the position matching processing. The constraint-based optimization of the disclosed systems and methods accordingly provide a technical solution to the data processing challenges presented by position matching in certain markets.

The disclosed methods and systems may implement the procedures as described herein for various practical applications, including, for instance, the physical settlement of CME US LNG Export (USLE) futures. The procedure may ensure that positions assignment is performed by matching the seller and the buyer based on the seller quantity. In many LNG cases, the seller quantity corresponds with the full cargo of a shipment. The seller quantity is therefore the exact number of contracts equivalent to a full cargo. The challenge addressed by the disclosed procedure addresses two factors present in the LNG context, namely that: (1) the wide range of cargo size makes the probability of matching two parties with exact volume after netting out all aggregate positions very slim; and, (2) partial loading is not permitted by terminals. One purpose of the gross-up/gross-down procedure is thus to allow the allocation and matching of positions post-expiry regardless of any inherent constraints pertaining to deliverable volume that can only be performed in specific quantities.

In the absence of the disclosed methods and systems, under the current clearing model and for physically delivered futures, the netted long/short position post expiry always equates to the commodity volume that goes for delivery. The buyer position is thus adjusted to equal the delivered quantity. This approach cannot, and does not, utilize an optimization process, let alone support an optimization process in which one or more constraints are established as described herein.

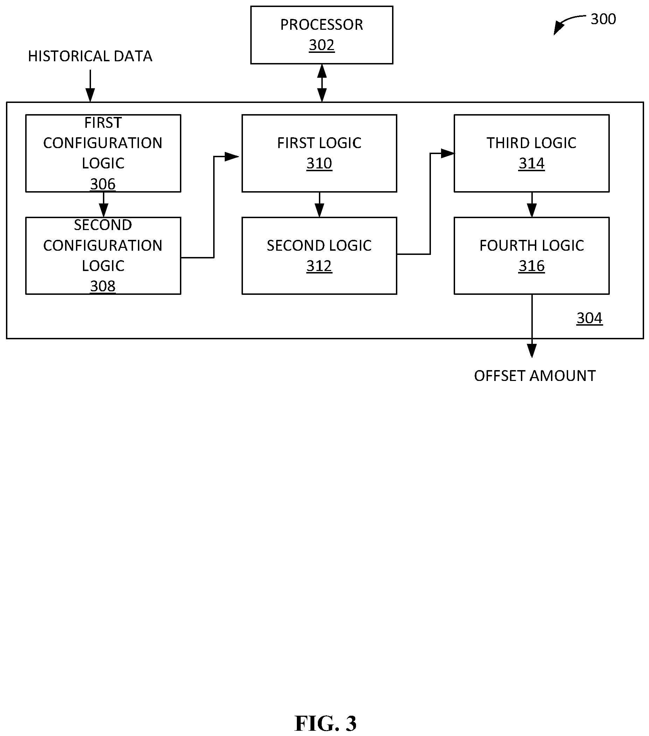

Referring to Figure 3, a system 300 is directed to linking and equivalence of data objects, such as financial product positions in accordance with one embodiment. The financial product may be a futures contract involving physical settlement. The physical settlement may involve or include delivery of an item, such as a shipment of a commodity. The shipment thus has a size that corresponds with the cargo of the ship or other vessel involved in the delivery. The system 300 is configured to link opposing positions for the financial product despite a difference between quantities of the opposing positions. As described below, the system 300 attains equivalence of the linked positions despite the difference through application (e.g., cash settlement) of an offset amount.

The system includes a processor 302 and a memory 304 coupled therewith. The processor 302 may be or include one of the processors described herein and/or another processor. The memory 304 may be or include one of the memories described herein and/or another memory.

The system 300 includes a number of logic units 306-316 stored in the memory 304. Each logic unit 306-316 is executable by the processor 302. For instance, each logic unit 306-316 may include one or more instruction sets executable by the processor 302. The system 300 may include additional, fewer, or alternative logic units. For instance, any one or more of the logic units 306-316 may be integrated with another to any desired extent.

Execution of a first configuration logic 306 causes the processor 302 to obtain historical and/or other statistical data for a size of an item. In some cases, the item is a cargo shipment, such as a LNG shipment. The historical or other statistical data may be specific to a port to which the cargo or other shipments are delivered, but the item need not be or involve cargo or a shipment. In LNG examples, the size of the item may be measured in cubic meters, but other units may be used, including, for instance, British Thermal Units. The item may be any other commodity or item for which the procedure may be useful. The units and, thus, the nature of the historical or other statistical data may vary in accordance with the type of item.

Execution of a second configuration logic 308 causes the processor 302 to determine a range of acceptable data object quantities based on the historical data. In futures contract examples, the data object is representative of a position held by a market participant. For instance, the data objects may be representative of buy (long) or sell (short) positions in CME US USLE futures. The data object quantity then corresponds with the number of contracts in the position.

Execution of the second configuration logic 308 may cause the processor 302 to determine the range of acceptable data object quantities through execution of a routine. In LNG and other physical delivery examples, the routine may begin with establishing a specific range of cargo sizes that may be eligible for delivery based on the historical data at a respective port, e.g., the historical data at Sabine Pass. For instance, a number of ranges (e.g., Q-Max - g.t. 250k m^3, Q-Flex - 200k-250k m^3, and Standard - 100-200k m^3) may be established for cargo shipments that can make deliveries at the Sabine Pass LNG terminal or other port of loading. The routine may then include conversion of the cargo size range into units relied upon by the futures contract market. In LNG examples, the conversion may be from cubic meters to million British Thermal Units (MMBtu). For instance, the conversion may use a conversion rate of 22.5, which represents the thermal value of an LNG molecule produced in U.S. The routine may then determine the number of futures contracts from the converted item size. For instance, each futures contract equals 10,000 MMBtu.

In some cases, the routine implemented via execution of the second configuration logic 308 causes the processor 302 to build a frequency distribution. For instance, the frequency distribution may be indicative of historical cargo ranges at a port of loading. The table below depicts an example of historical data, taken from Sabine Pass LNG terminal.

| Prospective Size Range | Frequency | Total | Percent of Total |
|---|---|---|---|
| 3.0 to 4.0 | 522 | 523 | 0.998087954 |
| 3.2 to 4.0 | 484 | 523 | 0.92543021 |
| 3.4 to 4.0 | 434 | 523 | 0.829827916 |
| 3.5 to 3.9 | 360 | 523 | 0.68833652 |
| 3.4 to 3.9 | 433 | 523 | 0.82791587 |
| 3.4 to 3.85 | 378 | 523 | 0.722753346 |
| 3.4 to 3.8 | 273 | 523 | 0.521988528 |
| 3.4 to 3.75 | 239 | 523 | 0.456978967 |
| 3.5 to 3.75 | 166 | 523 | 0.317399618 |

Using the frequency distribution, a confidence interval may then be calculated that captures a predetermined or desired percentage of past observed cargo shipment or other item sizes. In one example, this calculation includes the following:
Lower Bound of Cargo Size

$$\rho 1 = \mu - Z\alpha/2 * \sigma/(\sqrt{N})$$

Upper Bound of Cargo Size

$$\rho 2 = \mu + Z\alpha/2 * \sigma/(\sqrt{N})$$

Where

$\mu$ = Mean
$\sigma$ = Standard Deviation
$Z\alpha/2$ = Confidence Coefficient for $\alpha$
$N$ = Cargo size universe across all terminals over time period t

As described below, the cargo size range [$\rho$1, $\rho$2] then becomes the constraint of the position matching algorithm exclusively post expiry. The cargo size range [$\rho$1, $\rho$2] may be recalibrated or otherwise recalculated periodically, e.g., either over a specific time period (annual, quarterly, etc.) or otherwise repeated, such as when the trends of the shipping market change.

The first and second configuration logic units 306, 308 may not be implemented during each execution iteration. For instance, the logic units 306, 308 may be implemented once during a preliminary calibration or other procedure used to configure the method for future execution. The logic units 306, 308 may then be selectively implemented thereafter as warranted for, e.g., re-calibration or other configuration adjustments.

Execution of a first logic 310 causes the processor 302 to collect a plurality of data objects. The above-described range constraints are used to collect the data objects. Each data object has a respective quantity falling within the range of acceptable data object quantities. In LNG examples, each data object is representative of a position, such as a buy or sell position in the USLE futures market. The data objects may be collected from or via one of the modules of the exchange described above in connection with Figure 1. Alternatively or additionally, the data objects are collected from a database via one or more database queries. The manner in which the data objects are collected may vary in accordance with the data structures or other arrangements in which the data objects are stored.

Execution of a second logic 312 causes the processor 302 to implement an optimization procedure. The optimization procedure is directed to linking pairs of opposing data objects of the plurality of data objects with one another. The optimization procedure has one or more constraints. One constraint is that the respective quantities of each pair of opposing data objects falls within a predetermined offset magnitude of one another. The predetermined offset magnitude may be expressed as a percentage of one of the positions (e.g., presently ±15% of the buy position).

In futures examples, the optimization procedure may be implemented after the last trading date (LTD). At that and/or another time, the clearinghouse may use the optimization procedure to conduct an assignment and position matching routine. In some cases, preliminary position matching may be repeated every day during the trading session, e.g., an Exchange for Related Position (EFRP) session. After the last day of EFRP session, the optimization procedure links (e.g., matches) the appropriate long/short positions of similar size.

The optimization procedure may be configured to achieve a maximum number of opposing pairs of data objects. For instance, one or more constraints on the optimization procedure may be directed to maximizing the number of opposing pairs of data objects. Alternatively or additionally, the optimization procedure may be configured to minimize the offsets between differences between the quantities of the opposing data objects. Alternative or additional variables may be maximized or minimized. For example, various distances, such as the distance to a port, may be minimized. Any number of additional or alternative constraints may be applied in configuring the optimization procedure.

Execution of a third logic 314 causes the processor 302 to determine, for each linked pair of opposing data objects, an offset amount for the linked pair. The offset amount corresponds with an offset between the respective quantities of the linked pair of opposing data objects. In futures examples, the offset amount is the number of contracts by which the buy and sell positions differ.

Execution of a fourth logic 316 causes the processor 302 to apply, for each linked pair of opposing data objects, the offset amount to a record associated with one of the linked pair of opposing data objects. Applying the offset amount attains equivalence of the linked pair of opposing data objects. In futures examples, the record may be an account record of the market participant holding one of the positions. Any excess or shortfall is cash settled up to the ±15% of the netted position. The cash settlement may thus adjust the position in either a gross-up or gross-down manner.

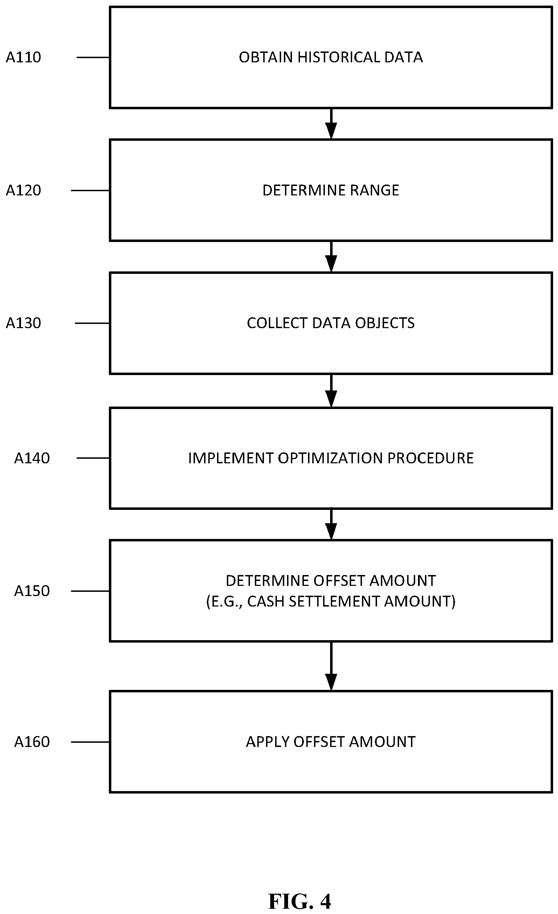

Fig. 4 depicts a method for data object linking and equivalence. In some cases, the linking implements a position matching in connection with a financial product. One or more of the above-described processors and/or systems may be used to implement the method.

The computer implemented method includes obtaining historical and/or other statistical data for a size of an item, such as cargo sizes in connection with deliveries associated with the financial product (act A110).

The method further includes determining a range of acceptable data object quantities based on the historical or other statistical data, such as a range of acceptable quantities for the positions based on the historical data (act A120).

The method further includes collecting a plurality of data objects, each data object of the plurality of data objects having a respective quantity falling within the range of acceptable data object quantities (act A130). The act A130 may include collecting position data indicative of a plurality of positions for the financial product, each position of the plurality of positions having a respective quantity falling within the range of acceptable quantities.

The method further includes implementing an optimization procedure to link pairs of opposing data objects of the plurality of data objects with one another (act A140). The optimization procedure has a constraint that the respective quantities of each pair of opposing data objects fall within a predetermined offset magnitude of one another. In some cases, the act A140 includes matching a buy position of the plurality of position with a sell position of the plurality of positions based on the collected position data, the respective quantities of the buy position and the sell position falling within a predetermined variation parameter of one another.

The method further includes determining, for each linked pair of opposing data objects, an offset amount for the linked pair of opposing data objects (act A150). The offset amount corresponds with an offset between the respective quantities of the linked pair of opposing data objects. In futures examples, the act A150 includes determining a cash settlement amount for the matched buy and sell positions, the cash settlement amount corresponding with an offset between the buy position and the sell position.

The method further includes applying, for each linked pair of opposing data objects, the offset amount to a record associated with one of the linked pair of opposing data objects to attain equivalence of the linked pair of opposing data objects (act A160).

The method may include any one or more of the following features. Matching the buy position with the sell position includes adjusting an amount settled via physical delivery from the buy position to the sell position. The predetermined variation parameter includes a fractional amount of the buy position. The historical data includes delivery port-specific data. Determining the range of acceptable quantities is implemented on a delivery port-specific basis. Determining the range of acceptable quantities is implemented periodically. The respective quantity of each position of the plurality of positions equals a multiple of acceptable incremental amount of a physical quantity associated with the financial product. Collecting the position data includes dividing an incoming position into multiple positions of the plurality of positions such that the multiple positions fall within the range of acceptable quantities. The financial product is associated with a physical market having delivery constraints.

The method may include fewer, additional, or alternative acts. For instance, after linking (e.g., position assignment), a notification may be generated and sent to the clearing firms with data indicative of the linked data objects (e.g., matched positions). The clearing firms may then use the notification to adjust one or more reports and/or for matching an Exchange adjusted position on assignment day.

In some cases, the predetermined variation parameter is a percentage, e.g., 15%, of the buy position. The percentage may vary. The percentage or other parameter establishes the maximum portion that may be cash settled.

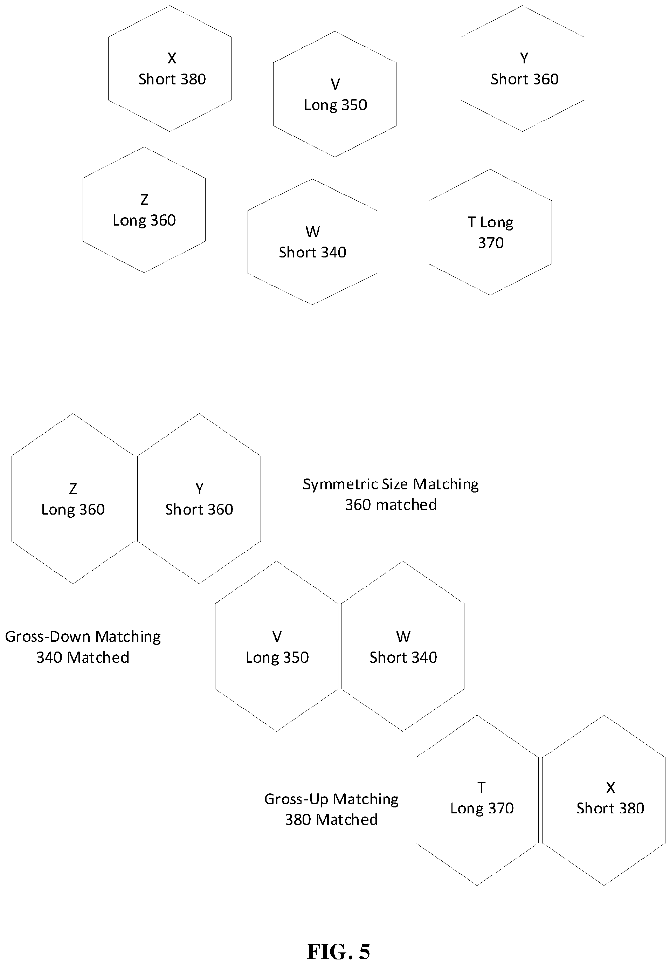

Figure 5 depicts an example of use of the above-described methods and systems in an LNG futures context. In that example, a gross-down matching is executed for 340 contracts between parties V and W, and a gross-up matching is executed for 380 contracts between parties T and X. In each case, a variation total of 10 contracts remains to be settled. Thus, a cash settlement of equivalent to 10 futures contracts is executed between parties V and W, and also between parties T and X.

In some cases, the system is or includes an electronic data transaction processing system, such as the processing systems described above. For instance, the system may be or include one in which data items are transacted by a hardware matching processor that matches incoming electronic data transaction request messages, for one of the data items based on a first set of transaction parameters, received from different client devices over a data communication network with at least one other previously received but unsatisfied electronic data transaction request message counter thereto to at least partially satisfy one or both of the incoming electronic data transaction request messages or the at least one other previously received electronic data transaction request message. Additional or alternative processing systems may be used.

Systems and methods for range-limited variation matching have been described above. The disclosed methods and systems address cargo and other logistics, as well as interests in minimizing partial deliveries.

IX. CONCLUSION

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings and described herein in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the described embodiments should not be understood as requiring such separation in all embodiments, and it should be understood that the described program components and systems can generally be integrated together in a single software product or packaged into multiple software products.

One or more embodiments of the disclosure may be referred to herein, individually and/or collectively, by the term "invention" merely for convenience and without intending to voluntarily limit the scope of this application to any particular invention or inventive concept. Moreover, although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is therefore intended that the foregoing detailed description be regarded as illustrative rather than limiting, and that it be understood that it is the following claims, including all equivalents, that are intended to define the scope of this invention.

Several embodiments of the invention are now highlighted by the following numbered clauses:

Clause 1 A system for matching in connection with a financial product, the system comprising: a processor; a memory coupled with the processor; first logic stored in the memory and executable by the processor to cause the processor to collect a plurality of data objects, each data object of the plurality of data objects having a respective quantity falling within a predetermined range of acceptable data object quantities; second logic stored in the memory and executable by the processor to cause the processor to implement an optimization procedure to link pairs of opposing data objects of the plurality of data objects with one another, the optimization procedure having a constraint that the respective quantities of each pair of opposing data objects fall within a predetermined offset magnitude of one another; third logic stored in the memory and executable by the processor to cause the processor to determine, for each linked pair of opposing data objects, an offset amount for the linked pair of opposing data objects, the offset amount corresponding with an offset between the respective quantities of the linked pair of opposing data objects; and fourth logic stored in the memory and executable by the processor to cause the processor to apply, for each linked pair of opposing data objects, the offset amount to a record associated with one of the linked pair of opposing data objects to attain equivalence of the linked pair of opposing data objects.

Clause 2 The system of clause 1, wherein each pair of opposing data objects comprises a buy object of the plurality of data objects and a sell object of the plurality of data objects.

Clause 3 The system of clause 2, wherein the offset magnitude comprises a fractional amount of the buy object.

Clause 4. The system of clause 1, wherein execution of the second logic causes the processor to adjust an amount settled via physical delivery from a buy data object of the plurality of data objects to a sell data object of the plurality of data objects.

Clause 5 The system of clause 1, wherein each data object of the plurality of data objects is directed to a financial product, the financial product being associated with a physical market having delivery constraints.

Clause 6. The system of clause 1, wherein: the plurality of data objects correspond with a plurality of positions for a financial product related to cargo shipments; each pair of opposing data objects comprises a data object corresponding with a buy position of a plurality of positions; each pair of opposing data objects comprises a data object corresponding with a sell position of the plurality of positions; the offset amount comprises a cash settlement amount; and the record comprises an account of a market participant holding either the buy position or the sell position.

Clause 7. The system of clause 1, further comprising: first configuration logic stored in the memory and executable by the processor to cause the processor to obtain historical data for a size of an item; second configuration logic stored in the memory and executable by the processor to cause the processor to determine the range of acceptable data object quantities based on the historical data.

Clause 8. The system of clause 7, wherein the size of the item comprises a cargo shipment size.

Clause 9. The system of clause 7, wherein execution of the second configuration logic causes the processor to determine the range of acceptable data object quantities on a delivery port-specific basis.

## Claims

1.   A computer implemented method for data object linking and equivalence, the computer implemented method comprising:

collecting, by the processor, a plurality of data objects, each data object of the plurality of data objects having a respective quantity falling within a predetermined range of acceptable data object quantities;

implementing, by the processor, an optimization procedure to link pairs of opposing data objects of the plurality of data objects with one another, the optimization procedure having a constraint that the respective quantities of each pair of opposing data objects fall within a predetermined offset magnitude of one another;

determining, by the processor, for each linked pair of opposing data objects, an offset amount for the linked pair of opposing data objects, the offset amount corresponding with an offset between the respective quantities of the linked pair of opposing data objects; and

applying, by the processor, for each linked pair of opposing data objects, the offset amount to a record associated with one of the linked pair of opposing data objects to attain equivalence of the linked pair of opposing data objects.

2. The computer implemented method of claim 1, wherein each pair of opposing data objects comprises a buy object of the plurality of data objects and a sell object of the plurality of data objects.

3. The computer implemented method of claim 2, wherein the offset magnitude comprises a fractional amount of the buy object.

4. The computer implemented method of any preceding claim, wherein implementing the optimization procedure comprises adjusting an amount settled via physical delivery from a buy data object of the plurality of data objects to a sell data object of the plurality of data objects.

5. The computer implemented method of any preceding claim, wherein collecting the plurality of data objects comprises dividing an incoming data object into multiple data objects of the plurality of data objects such that each of the multiple data objects has a respective quantity that falls within the predetermined range of acceptable data object quantities.

6. The computer implemented method of any preceding claim, wherein each data object of the plurality of data objects is directed to a financial product, the financial product being associated with a physical market having delivery constraints.

7. The computer implemented method of any preceding claim, wherein:

the plurality of data objects correspond with a plurality of positions for a financial product related to cargo shipments;

each pair of opposing data objects comprises a data object corresponding with a buy position of a plurality of positions;

each pair of opposing data objects comprises a data object corresponding with a sell position of the plurality of positions;

the offset amount comprises a cash settlement amount; and

the record comprises an account of a market participant holding either the buy position or the sell position.

8. The computer implemented method of any preceding claim, further comprising:

obtaining, by a processor, statistical data for a size of an item;

determining, by the processor, the range of acceptable data object quantities based on the statistical data.

9. The computer implemented method of claim 8, wherein the size of the item comprises a cargo shipment size.

10. The computer implemented method of claim 8, wherein determining the range of acceptable data object quantities is implemented on a delivery port-specific basis.

11. The computer implemented method of claim 8, wherein determining the predetermined range of acceptable data object quantities is implemented periodically.

12. A system for matching in connection with a financial product, the system arranged to perform the method of any preceding claim and comprising:

a processor;

a memory coupled with the processor;

first logic stored in the memory and executable by the processor to cause the processor to collect a plurality of data objects, each data object of the plurality of data objects having a respective quantity falling within a predetermined range of acceptable data object quantities;

second logic stored in the memory and executable by the processor to cause the processor to implement an optimization procedure to link pairs of opposing data objects of the plurality of data objects with one another, the optimization procedure having a constraint that the respective quantities of each pair of opposing data objects fall within a predetermined offset magnitude of one another;

third logic stored in the memory and executable by the processor to cause the processor to determine, for each linked pair of opposing data objects, an offset amount for the linked pair of opposing data objects, the offset amount corresponding with an offset between the respective quantities of the linked pair of opposing data objects; and

fourth logic stored in the memory and executable by the processor to cause the processor to apply, for each linked pair of opposing data objects, the offset amount to a record associated with one of the linked pair of opposing data objects to attain equivalence of the linked pair of opposing data objects.

13. The system of claim 12, wherein execution of the second logic causes the processor to adjust an amount settled via physical delivery from a buy data object of the plurality of data objects to a sell data object of the plurality of data objects.

14. The system of claim 12, further comprising:

first configuration logic stored in the memory and executable by the processor to cause the processor to obtain historical data for a size of an item;

second configuration logic stored in the memory and executable by the processor to cause the processor to determine the range of acceptable data object quantities based on the historical data.

15. The system of claim 14, wherein execution of the second configuration logic causes the processor to determine the range of acceptable data object quantities on a delivery port-specific basis.

FIG. 1

200

BUS 208

PROCESSOR
202

INSTRUCTIONS
212

MEMORY
204

INSTRUCTIONS
212

DRIVE UNIT
206

COMPUTER
READABLE
MEDIUM
210

INSTRUCTIONS
212

DISPLAY
214

USER INPUT DEVICE
216

COMMUNICATION
INTERFACE
218

INTERNET AND/OR OTHER
NETWORK(S)
220

**FIG. 2**

FIG. 3

A110 — OBTAIN HISTORICAL DATA

A120 — DETERMINE RANGE

A130 — COLLECT DATA OBJECTS

A140 — IMPLEMENT OPTIMIZATION PROCEDURE

A150 — DETERMINE OFFSET AMOUNT
(E.G., CASH SETTLEMENT AMOUNT)

A160 — APPLY OFFSET AMOUNT

**FIG. 4**

X
Short 380

V
Long 350

Y
Short 360

Z
Long 360

W
Short 340

T Long
370

Z
Long 360

Y
Short 360

Symmetric Size Matching
360 matched

Gross-Down Matching
340 Matched

V
Long 350

W
Short 340

Gross-Up Matching
380 Matched

T
Long 370

X
Short 380

**FIG. 5**

Europäisches
Patentamt

European
Patent Office

Office européen
des brevets

# EUROPEAN SEARCH REPORT

Application Number

EP 20 16 3898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/118460 A1 (BAUERSCHMIDT PAUL A [US] ET AL) 24 May 2007 (2007-05-24) * paragraph [0033]; figure 1 * ----- | 1-15 | INV. G06Q40/04 G06Q40/00 |
| X | US 2017/371879 A1 (JANG SEO WOOK [US] ET AL) 28 December 2017 (2017-12-28) * paragraph [0039]; figure 1 * ----- | 1-15 | |
| X | US 2018/268481 A1 (BONIG ZACHARY [US]) 20 September 2018 (2018-09-20) * paragraph [0085]; figure 1 * ----- | 1-15 | |

**TECHNICAL FIELDS SEARCHED (IPC)**

G06Q

The present search report has been drawn up for all claims

| Place of search | Date of completion of the search | Examiner |
|---|---|---|
| The Hague | 8 June 2020 | Arbutina, Ljiljana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 3898

08-06-2020

| Patent document cited in search report | | Publication date | Patent family member(s) | | Publication date |
|---|---|---|---|---|---|
| US 2007118460 | A1 | 24-05-2007 | CA | 2626935 A1 | 31-05-2007 |
| | | | EP | 1952333 A2 | 06-08-2008 |
| | | | EP | 1952334 A2 | 06-08-2008 |
| | | | EP | 1952335 A2 | 06-08-2008 |
| | | | JP | 5221371 B2 | 26-06-2013 |
| | | | JP | 2009516878 A | 23-04-2009 |
| | | | US | 2007118453 A1 | 24-05-2007 |
| | | | US | 2007118454 A1 | 24-05-2007 |
| | | | US | 2007118460 A1 | 24-05-2007 |
| | | | US | 2009234776 A1 | 17-09-2009 |
| | | | US | 2010205113 A1 | 12-08-2010 |
| | | | US | 2010312689 A1 | 09-12-2010 |
| | | | US | 2012084195 A1 | 05-04-2012 |
| | | | US | 2013232051 A1 | 05-09-2013 |
| | | | US | 2014244472 A1 | 28-08-2014 |
| | | | WO | 2007061857 A2 | 31-05-2007 |
| | | | WO | 2007061961 A2 | 31-05-2007 |
| | | | WO | 2007061970 A2 | 31-05-2007 |
| US 2017371879 | A1 | 28-12-2017 | NONE | | |
| US 2018268481 | A1 | 20-09-2018 | EP | 3457345 A1 | 20-03-2019 |
| | | | US | 2018268481 A1 | 20-09-2018 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62820240
- US 20170331774 A
- US 7853499 B
- US 53449912
- US 20140006243 A1